# NEUE EUROPÄISCHE PATENTSCHRIFT

(11) **EP 1 288 026 B2**
(45) Veröffentlichungstag und Bekanntmachung des Hinweises auf die Entscheidung über den Einspruch: **26.01.2011**
(45) Hinweis auf die Patenterteilung: 27.04.2005
(21) Anmeldenummer: 02017117.9
(22) Anmeldetag: 30.07.2002
(51) Int. Cl.: B60D 1/54

(54) **Anhängekupplung**
Trailer coupling
Attelage de remorque

(30) Priorität: 03.09.2001 DE 10144254
(43) Veröffentlichungstag der Anmeldung: 05.03.2003
(73) Patentinhaber: SCAMBIA Industrial Developments Aktiengesellschaft, 9494 Schaan (LI)
(72) Erfinder: Kleb, Emmerich, 71706 Markgröningen (DE); Riehle, Hans, 71638 Ludwigsburg (DE); Fischer, Michael, 71679 Asperg (DE); Dreher, Martin, 71696 Möglingen (DE)
(74) Vertreter: Hoeger, Stellrecht & Partner Patentanwälte

(56) Entgegenhaltungen:
- EP-A- 1 024 036
- EP-A- 1 142 732
- EP-A- 1 160 104
- DE-A- 19 848 487
- DE-A- 19 858 978
- DE-A- 19 859 961

## Beschreibung

Die Erfindung betrifft eine Anhängekupplung für Kraftfahrzeuge, umfassend ein fahrzeugfest angeordnetes Lagerteil, einen gegenüber dem Lagerteil zwischen einer Arbeitsstellung und einer Ruhestellung bewegbaren Kugelhals, welcher mittels eines Lagerkopfes an dem Lagerteil zumindest drehbar gelagert ist, eine Kugelhalsfixierung mit Formschlutielementen, welche durch Relativbewegung von einer Fixierstellung, in welcher der Laserkopf relativ zum Lagerteil formschlüssig festgelegt ist, in eine Lösestellung, in welcher der Lagerkopf gegenüber dem lagerteil bewegbar ist, überführbar sind und umgekehrt, und eine mechanische Positioniereinrichtung, mit welcher die Relativbewegung der Forrmehlußelemente zum Erreichen der Fixierstellung und der Lösestellung ausführbar ist.

Die bislang bekannten Lösungen sind entweder mechanisch aufwendig oder hinsichtlich der Erreichbarkeit einer sicheren Verriegelung in allen möglichen Betnebszuständen nicht optimal.

Der Erfindung liegt daher die Aufgabe zugrunde, bei einfachem mechanischem Aufbau, insbesondere der Kugelhalsfixerung, eine möglichst zuverlässige Sicherheitsfunktion zu erreichen.

Diese Aufgabe wird bei einer Anhängekupplung der eingangs beschriebenen, z.B. aus der DE 19 858 978 A1 bekannten Art erfindungsgemäß durch die Merkmale des Anspruchs 1 gelöst.
Um zu erreichen, daß die Positioniereinrichtung die Fixierstellung dann, wenn diese eingenommen wurde, nicht verläßt, ist vorgesehen, daß die Positioniereinrichtung eine Mechanik aufweist, die In der Fixierstellung selbsttätig eine stabile Stellung aufrecht erhält. Durch eine derartige ausgebildete Positioniereinrichtung besteht die Möglichkeit, die Fixierstellung einerseits sicher zu erreichen und andererseits zu verhindern, daß die Positioniereinrichtung die Fixierstellung wieder verläßt.
Es ist vorgesehen, daß die Mechanik eine Kraftübertragungsmechanik für den Kraftspeicher ist, so daß beispielsweise der Kraftspeicher in die Mechanik integriert ist, die somit zusätzlich zum Erreichen der stabilen Stellung auch gleichzeitig dazu dient, die Kräfte des Kraftspeichers zu übertragen.
Um eine möglichst vorteilhafte Wirkung der Kräfte des Kraftspeichers zu erhalten, ist vorgesehen, daß die Kraftübertragungsmechanik als Kraftübersetzungsmechanik ausgebildet ist und somit nicht die von dem Kraftspeicher erzeugte Kraft in gleichem Verhältnis überträgt, sondern zumindest in einem Teil der möglichen Stellungen eine Kraftverstärkung bewirkt.
Die erfindungsgemäße Lösung sieht vor, daß die Positioniereinrichtung eine Spannstellung als Fixierstellung aufweist, in welcher die Positioniereinrichtung eine Kraft erzeugt, die zu einer auf den Lagerkopf wirkenden Spannkraft beiträgt.
Eine derartige Spannkraft läßt sich dazu einsetzen, um den Lagerkopf in der Fixierstellung spielfrei zu positionieren und somit die Funktionssicherheit der Anhängekupplung, insbesondere hinsichtlich der Dauerlastheständigkeit der Anhängekupplung zu verbessern.
Im Hinblick auf eine möglichst einfache konstruktive Lösung und eine möglichst spielfreie Lagerung sind die Formschlußelemente am Lagerteil stationär angeordnet.
Ferner sind auch die Formschlußelemente am Lagerkopf stationär angeordnet. Eine derartige stationäre Anordnung ist dabei so zu verstehen, daß die Formschlußelemente relativ zum Lagerteil oder relativ zum Lagerkopf unbeweglich, das heißt starr mit diesem verbunden, angeordnet sind.
Beispielsweise ist vorgesehen, daß Formschlußelemente am Lagerteil und Formschlußelemente am Lagerkopf angeordnet sind, daß der Lagerkopf in einer Richtung quer zu einer Schwenkrichtung relativ zum Lagerteil bewegbar ist, um die Formschlußelemente zwischen der Fixierstellung und der Lösestellung zu bewegen, daß die Positioniereinrichtung in eine Fixierstellung bringbar ist, In welcher diese den Lagerkopf derart positioniert, daß die Formschlußelemente in der Fixierstellung stehen, und in eine Lösestellung bringbar ist, in welcher diese den Lagerkopf derart positioniert, daß die Formschlußelemente in der Lösestellung stehen, daß die Positionleroinrichtung durch eine Betätigung von der Fixierstellung in die Lösestellung bringbar ist und daß die Positiontereinrichtung einen Kraftspeicher aufweist, welcher in der Lösestellung eine Rückstellkraft erzeugt, die im unbetätigten Zustand der Positioniereinrichtung in Richtung eines Übergangs in die Fixierstellung wirkt, so daß die Positioniereinrichtung die Formschlußelemente in der Arbeitsstellung und der Ruhestellung selbsttätig von der Lösestellung in die Fixierstellung überfährt.

Der Vorteil der Lösung ist darin zu sehen, daß durch die Verschiebung des Lagerkopfes eine einfache Möglichkeit besteht, die Formschlußelemente zwischen der Lösestellung und der Fixierstellung hin und her zu bewegen und daß andererseits über die Positioniereinrichtung mit dem Kraftspeicher die Möglichkeit besteht, daß die Positioniereinrichtung selbsttätig die Formschlußelemente von der Lösestellung in die Fixierstellung überführt, so daß die Anhängekupplung in der Arbeitsstellung und in der Ruhestellung stets selbsttätig von der Lösestellung in die Fixierstellung übergeht.

Grundsätzlich wäre es denkbar, die Rückstellkraft des Kraftspeichers ständig aktiv zu lassen.

Eine besonders vorteilhafte Lösung sieht jedoch vor, daß die Rückstellkraft des Kraftspeichers durch Überführen der Positioniereinrichtung von der Fixierstellung in die Lösestellung aktivierbar ist.

Prinzipiell wäre es möglich, die Wechselwirkung zwischen der Positioniereinrichtung und dem Lagerkopf derart zu realisieren, daß die Positioniereinrichtung den Lagerkopf lediglich in Richtung der Fixierstellung beaufschlagt und zum Übergang in die Lösestellung freigibt.

Aus Gründen einer möglichst sicheren und möglichst wenig fenleranfälligen Funktion ist es jedoch vorteilhaft, wenn die Positioniereinrichtung den Lagerkopf zwangsgesteuert zwischen der Fixierstellung und der Lösestellung hin- und herbewegt.

Noch besser ist es dabei, wenn die Mechanik In der Fixierstellung gegen eine Bewegung in Richtung der Lösestellung eine Seibstsperrung aufweist, so daß eine noch gröbere Funktionssicherheit gewährleistet ist.

Hinsichtlich der Ausbildung der Mechanik sind die unterachiedlichsten Lösungen denkbar.

So wäre es beispielsweise denkbar, die Mechanik als Rädergetriebe auszubilden.

Eine konstruktiv besonders einfache Lösung sieht jedoch vor, daß die Mechanik eine Hebelmechanik ist.

Hinsichtlich der Ausbildung des Kraftspeichers wurden im Zusammenhang mit der bisherigen Erläuterung der einzelnen Ausführungsbeispiele keine näheren Angaben gemacht.

Beispielsweise wäre es denkbar, den Kraftspeicher als elektrisch wirkenden Kraftspeicher, beispielsweise als Magnet oder auch als pneumatischen Kraftspeicher auszubilden.

Eine besonders robuste und einfache Lösung sieht jedoch vor, daß der Kraftspeicher ein mechanischer Kraftspeicher ist.

Konstruktiv besonders einfach läßt sich der Kraftspeicher dabei als Federkraftspeicher realisierten.

Hinsichtlich der Ausführung des Kraftspelchers im Zusammenhang mit der Fixierstellung und der Lösestellung sind die unterschiedlichsten Möglichkeiten denkbar.

Beispielsweise wäre es denkbar, den Kraftspeicher so einzusetzen, daß dieser in der Fixierstellung keine Kraftwirkung mehr entfaltet.

Besonders günstig ist es jedoch, wenn der Kraftspeicher in der Fixierstellung in einem ersten gespannten Zustand ist und in der Lösestellung in einem zweiten gespannten Zustand, so daß selbst in der Fixierstellung der Kraftspeicher noch mit einer Kraft wirksam ist.

Eine derartige Kraft ist in vielerlei Fällen von Vorteil. Beispielsweise ist dies deshalb von Vorteil, damit sichergestellt werden kann, daß die Positioniereinrichtung mit größtmöglicher Funktionssicherheit in die Fixierstellung übergeht und nicht aufgrund mechanischer Hemmungen die Fixierstellung nicht erreicht.

Besonders vorteilhaft ist es dabei, wenn die Mechanik im unbetätigten Zustand der Positioniereinrichtung durch die Wirkung des Kraftspeichers selbsttätig in die stabile Stellung übergeht, so daß dergespannte Zustand des Kraftspeichers in der Fixierstellung dazu ausgenutzt werden kann, die stabile Stellung der Mechanik aufrechtzuerhalten.

Hinsichtlich der Ausbildung der Mechanik sind die unterschiedlichsten Möglichkeiten denkbar. Beispielsweise könnte die Mechanik völlig unabhängig von dem Kraftspeicher wirken und nur dazu dienen, die stabile Stellung und gegebenenfalls die Selbsthemmung zu erreichen.

Eine besonders günstige Art der Kranübersetzung sieht dabei vor, daß die Kranübersetzungsmechanik die in der Jeweiligen Stellung von dem Kraftspeicher erzeugte Kraft in der Lösestellung geringer verstärkt als in der Fixierstellung.

Um zum Erreichen der Fixierstellung eine möglichst große Kraft zur Verfügung zu haben, ist vorzugsweise vorgesehen, daß die Kraftübersetzungsmechanik in ihren nahe der Fixierstellung liegenden Stellungen die größte Verstärkung für die Kraft des Kraftspeichers aufweist.

Die Kraftübertragungsmechanik kann dabei in unterschiedlichster Art und Weise ausgebildet sein.

Beispielsweise wäre es denkbar, die Kraftübertragungsmechanik als Getriebe auszubilden.

Eine besonders günstige Lösung sieht vor, daß die Kraftübertragungsmechanik eine Kniehebelmechanik ist.

Um in der Fixierstellung einerseits möglichst große Kräfte zur Verfügung zu haben, andererseits eine möglichst stabile Stellung zu erreichen, ist vorzugsweise vorgesehen, daß die Kniehebelmechanik so ausgebildet ist, daß sie in der Fixierstellung nahe ihrer Totpunktstellung steht.

Eine derartige Kraft läßt sich in der Positioniereinrichtung beispielsweise durch den ohnehin vorhandenen Kraftspeicher erzeugen.

Besonders vorteilhaft ist es jedoch, wenn die Positioniereinrichtung einen Spannkraftspeicher umfaßt, welcher die zu der Spannkraft beitragende Kraft erzeugt.

Ein derartiger Spannkraftspeicher ist vorzugsweise unabhängig von dem Kraftspeicher für die Rückstellkraft, so daß mit der Rückstellkraft die stabile Stellung der Positioniereinrichtung erreichbar ist und dann die zur Spannkraft beitragende Kraft durch den Spannkraftspeicher erzeugbar ist.

Ein derartiger Spannkraftspeicher ist vorzugsweise als mechanischer Spannkraftspeicher insbesondere als Federkraftspeicher ausgebildet.

Eine besonders vorteilhafte Lösung sieht vor, daß der Spannkraftspeicher beim Übergang der Positioniereinrichtung in die Spannstellung aktivierbar ist, so daß der Spannkraftspeicher nicht ständig aktiviert sein muß, sondern erst in Stellungen nahe der Spannstellung aktiv ist.

Eine besonders günstige Lösung sieht vor, daß der Spannkraftspeicher zwischen der Spannstellung und einer Sperrstellung der Positioniereinrichtung aktiv ist.

Femer ist es günstig, wenn der Spannkraftspeicher zwischen der Sperrstellung und der Lösestellung inaktiv ist.

Eine besonders vorteilhafte Lösung sieht vor, daß der Spannktenspeicher durch den Übergang von der Sperrstellung in die Spannstellung aktivierbar ist.

Eine besonders einfache Form der Aktivierung des Spannkraftspeichers sieht vor, daß der Spannkraftspeicher durch den Kraftspeicher aktivierbar ist. Eine derartige Aktivierung läßt sich insbesondere dadurch erreichen, daß der Kraftspeicher die Positioniereinrichtung in die Spannstellung überführt und bei diesem Überführen gleichzeitig den Spannkraftspeicher aktiviert.

Eine konstruktiv besonders vorteilhafte Lösung sieht vor, daß der Spannkraftspeicher in die Mechanik der Positioniereinrichtung integriert ist.

Besonders günstig läßt sich dies realisieren, wenn der Spannkraftspeicher in die Kraftübersetzungsmechanik integriert ist. Im vorteilhaftesten Fall ist dabei der Spannkraftspeicher in einen Hebel der als Hebelmechanik ausgebildeten Kraftübersetzungsmechanik integriert.

Im Zusammenhang mit der bisherigen Beschreibung der einzelnen Ausführungsbeispiele der erfindungsgemäßen Lösung wurde nicht näher darauf eingegangen, wie die Positioniereinrichtung betätigbar sein soll.

Beispielsweise wäre es denkbar, eine direkte Betätigung der Positioniereinrichtung vorzunehmen.

Eine besonders günstige Lösung sieht jedoch vor, daß die Positioniereinrichtung durch eine Auslöseeinrichtung betätigbar ist, mit welcher primär ein Auslösen der Positioniereinrichtung unter Überführung derselben von der Fixierstellung in die Lösestellung erreichbar ist.

Besonders günstig ist es dabei, wenn mit der Auslöseeinrichtung die Mechanik der Positioniereinrichtung gegen die Wirkung des Kraftspeichers in die Lösestellung bewegbar ist, so daß die Auslöseeinrichtung eine geeignete Möglichkeit schafft, um die Positioniereinrichtung von der Fixierstellung oder Spannstellung in die Lösestellung zu überführen.

Um das Überführen der Positioniereinrichtung in die Lösestellung zu erleichtern ist vorzugsweise vorgesehen, daß die Auslöseeinrichtung mit einem Kraftverstärkungsgetriebe auf die Positioniereinrichtung einwirkt, so daß dadurch die in der Positioniereinrichtung wirkenden Kräfte, insbesondere die Kraft des Kraftspeichers leichter überwunden werden kann.

Eine besonders günstige Lösung sieht vor, daß die Auslöseeinrichtung mit einem Kurvengetriebe auf die Positioniereinrichtung einwirkt.

Ferner ist vorzugsweise vorgesehen, daß mit der Auslöseeinrichtung die Selbstsperrung der Positioniereinrichtung aufhebbar ist, so daß die Auslöseeinrichtung einem weiteren Zweck dient.

Um zusätzliche Sicherheit zu schaffen, ist vorzugsweise vorgesehen, daß mit der Auslöseeinrichtung die Positioniereinrichtung in der Fixierstellung oder Spannstellung sicherbar ist, so daß die Auslöseeinrichtung nicht nur zum Überführen von der Fixierstellung in die Lösestellung dienen kann, sondern gleichzeitig noch eine zusätzliche Sicherungsfunktion für die Positioniereinrichtung übernimmt.

Hinsichtlich der Betätigung der Auslöseeinrichtung sind die unterschiedlichsten Möglichkeiten denkbar. So sieht eine vorteilhafte Lösung vor, daß die Auslöseeinrichtung manuell betätigbar ist.

Um einen derartiges manuelles Betätigen der Auslöseeinrichtung von den direkt mit der Positioniereinrichtung zusammenwirkenden Elementen zu entkoppeln, ist vorzugsweise vorgesehen, daß die Auslöseeinrichtung über ein auf ein Stellelement wirkendes Freigangelement manuell betätigbar ist.

Ein derartiges Stellelement der Auslöseeinrichtung dient dabei dazu, die Positioniereinrichtung zu betätigen, während das Freigangelement mit Freigang gegenüber dem Stellelement bewegbar ist, so daß beispielsweise das Freigangelement nach Betätigung in seine Ausgangsstellung zurückkehren kann, während das Stellelement entsprechend der Stellung der Positioniereinrichtung verbleibt und beispielsweise dann erst wieder in die Ausgangsstellung zurückkehrt, wenn die Positioniereinrichtung in die Fixierstellung oder Spannstellung übergeht.

Alternativ oder ergänzend zur manuellen Betätigung der Auslöseeinrichtung sieht ein besonders vorteilhaftes Ausführungsbeispiel vor, wenn die Auslöseeinrichtung über einen elektrischen Auslöseantrieb betätigbar ist.

Ein derartiger elektrisch betriebener Auslöseantrieb hat den Vorteil, daß mit diesem die Bedienung der erfindungsgemäßen Anhängekupplung, insbesondere das Auslösen, bedienungsfreundlich gestaltet werden kann und insbesondere auch die Möglichkeit besteht, noch zusätzlich elektrisch überwachte Sicherungsfunktionen zu integrieren.

Der elektrische Auslöseantrieb kann in unterschiedlichster Art und Weise realisierbar sein.

Beispielsweise wäre es denkbar, den elektrischen Auslöseantrieb durch einen elektrisch betreibbaren Auslösemagnetantrieb zu realisieren.

Eine besonders effiziente und insbesondere stromsparende Lösung sieht vor, daß der elektrische Auslöseantrieb einen Antriebsmotor und eine elektrisch steuerbare Kupplung umfaßt.

Besonders vorteilhaft ist dabei die Verwendung eines elektrischen Antriebsmotors mit einem Untersetzungsgetriebe, da dadurch mit geringer elektrischer Leistung ausreichend große Kräfte erzeugt werden können und außerdem die steuerbare Kupplung dann die Möglichkeit schafft, den Antriebsmotor wieder zu entkoppeln.

Die elektrisch steuerbare Kupplung kann in unterschiedlichster Art und Weise steuerbar sein.

Beispielsweise wäre es denkbar, eine Kupplung einzusetzen, die durch elektrische Ansteuerung zwischen einem gelösten und einem geschlossenen Zustand hin- und herschaltbar ist.

Eine besonders günstige Lösung sieht jedoch vor, daß die elektrisch steuerbare Kupplung als im unbestromten Zustand gelöste Kupplung ausgebildet ist. Diese Ausbildung der Kupplung hat den großen Vorteil, daß bei Stromausfall die Kupplung stets gelöst ist und somit eine Verbindung zwischen dem Antriebsmotor und der Auslöseeinrichtung unterbrochen ist, so daß die Auslöseeinrichtung bei Stromausfall stets in den unbetätigten Zustand übergeht und damit in erfindungsgemäßer Art und Weise die Anhängekupplung stets selbsttätig in ihre sichere Stellung übergehen kann.

Diese Lösung ist ein großer Vorteil hinsichtlich der Funktionssicherheit der erfindungsgemäßen Anhängekupplung, da damit selbst bei Stromausfall sichergestellt ist, daß die Anhängekupplung selbsttätig in ihren gesicherten Zustand, das heißt in ihre Fixierstellung oder Spannstellung übergeht, ohne daß zusätzliche Maßnahmen erforderlich sind.

Hinsichtlich der Betätigung der Auslöseeinrichtung sind die unterschiedlichsten Möglichkeiten denkbar. Beispielsweise wäre es denkbar, die Kupplung dann zu lösen, wenn die Auslöseeinrichtung oder die Positioniereinrichtung eine bestimmte Stellung erreicht hat, wobei diese Stellung beispielsweise durch einen Sensor erfaßbar ist.

Eine besonders sichere Lösung sieht jedoch vor, daß die elektrische Auslöseeinrichtung eine Auslösesteuerung aufweist, welche nach einem Startsignal die elektrisch steuerbare Kupplung während einer festgelegten Auslösezeitdauer schließt und anschließend löst.

Dieses Abstellen der Ansteuerung der elektrisch steuerbaren Kupplung auf eine festgelegte Auslösezeitdauer bedeutet ein weiteres vorteilhaftes sicherheitsrelevantes Merkmal, da damit unabhängig von der Funktion der Auslöseeinrichtung und der Positioniereinrichtung stets ein Lösen der Kupplung erfolgt und somit sichergestellt ist, daß selbst dann, wenn die Positioniereinrichtung oder die Auslöseeinrichtung nicht in der vorgesehenen Art und Weise funktioniert und damit beispielsweise auch die von dem Sensor zu detektierende Stellung nicht erreicht werden kann, in jedem Fall die Betätigung der Auslöseeinrichtung durch das Lösen der Kupplung nach der festgelegten Auslösezeitdauer beendet wird.

Vorzugsweise wird dabei der Antriebsmotor des elektrischen Auslöseantriebs entsprechend der Kupplung während der Auslösezeitdauer angesteuert.

Hinsichtlich der Art der Einwirkung der Positioniereinrichtung auf den Lagerkopf wurden bislang keine näheren Angaben gemacht. So wäre es beispielsweise denkbar, daß die Positioniereinrichtung unmittelbar auf den Lagerkopf einwirkt.

Eine besonders günstige Lösung sieht vor, daß die Positioniereinrichtung über eine Kopplungseinrichtung auf den Lagerkopf einwirkt. Eine derartige Kopplungseinrichtung erlaubt in besonders vorteilhafter Weise mechanisch auf den Lagerkopf einzuwirken.

Hinsichtlich der Ausbildung der Kopplungseinrichtung sind dabei die unterschiedlichsten Möglichkeiten denkbar.

Eine vorteilhafte Art der Ausführung der Kopplungseinrichtung sieht vor, daß diese einen bewegbaren Lagerzapfen umfaßt, auf welchem der Lagerkopf drehbar gelagert ist und über welchen der Lagerkopf von der Fixierstellung in die Lösestellung und umgekehrt bewegbar ist. Dabei könnte der Lagerzapfen quer oder schräg zu seiner axialen Richtung relativ zum Lagerteil bewegbar sein. Er ist jedoch vorzugsweise in seiner axialen Richtung relativ zum Lagerteil bewegbar.

Das Vorsehen eines Lagerzapfens zur Lagerung des Lagerkopfes und gleichzeitig zum Bewegen des Lagerkopfes ist konstruktiv besonders vorteilhaft, da sich über diesen Lagerzapfen die für die Positionierung des Lagerkopfes erforderlichen Kräfte in besonders einfacher Weise auf diesen aufbringen lassen und insbesondere asymmetrisch auf den Lagerkopf wirkende Kräfte vermieden werden können.

Besonders vorteilhaft ist es dabei, wenn der Lagerkopf mittels des bewegbaren Lagerzapfens in Richtung einer ersten Lagerwange des Lagerteils bewegbar ist, welche die lagerteilseitigen Formschlußelemente trägt.

Damit besteht in einfacher Art und Weise die Möglichkeit, über den Lagerzapfen die Formschlußelemente miteinander in Eingriff zu bringen.

Ferner ist es günstig, wenn der Lagerzapfen in der ersten Lagerwange und einer zweiten im Abstand von dieser angeordneten Lagerwange des Lagerteils gelagert ist und wenn zwischen den Lagerwangen der Lagerkopf des Kugelhalses angeordnet ist.

Hinsichtlich des Orts der Einwirkung auf den Lagerzapfen wurden bislang keine näheren Angaben gemacht.

So sieht ein besonders günstiges Ausführungsbeispiel vor, daß eine Einwirkung auf den Lagerzapfen von einer dem Lagerkopf abgewandten Seite einer Lagerwange des Lagerteils erfolgt.

Besonders günstig ist es, wenn die Einwirkung auf den Lagerzapfen von der dem Lagerkopf abgewandten Seite der die lagerteilseitigen Formschlußelemente tragenden Lagerwange erfolgt.

Eine besonders vorteilhafte Lösung sieht vor, daß die Kopplungseinrichtung einen Umlenkhebel umfaßt, welcher mit dem Lagerzapfen gekoppelt ist, so daß über diesen Umlenkhebel eine einfache Betätigung des Lagerzapfens realisierbar ist.

Besonders günstig ist es dabei, wenn der Umlenkhebel auf einer dem Lagerkopf gegenüberliegenden Seite einer der Lagerwangen, vorzugsweise der ersten Lagerwange, angeordnet ist.

Hinsichtlich einer weiteren Sicherung des Lagerkopfes in der Fixierstellung wurden im Zusammenhang mit der bisherigen Erläuterung der einzelnen Ausführungsbeispiele keine näheren Angaben gemacht.

So sieht ein besonders vorteilhaftes Ausführungsbeispiel vor, daß der Lagerkopf durch eine Blockiereinrichtung gegen eine Bewegung von der Fixierstellung in Richtung der Lösestellung blockierbar ist und somit eine weitere Sicherung gegen ein Lösen der Kugelhalsfixierung vorliegt.

Diese Blockiereinrichtung kann prinzipiell an verschiedensten Stellen angeordnet sein.

Um die von dem Lagerkopf auf die Blockiereinrichtung wirkenden Kräfte möglichst vorteilhaft aufnehmen zu können, ist vorzugsweise vorgesehen, daß sich die Blockiereinrichtung an dem Lagerteil abstützt.

Besonders günstig ist es dabei, wenn die Blockiereinrichtung sich an einer der Lagerwangen des Lagerteils abstützt, vorzugsweise an der, welche die lagerteilseitigen Formschlußelemente trägt.

Hinsichtlich der Betätigung der Blockiereinrichtung wurden bislang noch keine näheren Angaben gemacht.

So wäre es beispielsweise denkbar, die Blockiereinrichtung entweder selbst und unabhängig von der Positioniereinrichtung zu betätigen oder auch beispielsweise die Blockiereinrichtung über die Positioniereinrichtung zu betätigen.

Besonders vorteilhaft ist es jedoch, wenn die Blockiereinrichtung durch die Auslöseeinrichtung betätigbar ist.

Vorzugsweise ist dabei die Blockiereinrichtung hinsichtlich ihrer Funktion mit der Auslöseeinrichtung mechanisch gekoppelt, so daß das Überführen der Positioniereinrichtung von der Fixierstellung in die Lösestellung zu einem damit mechanisch gekoppelten Lösen der Blockiereinrichtung führt.

Besonders vorteilhaft ist es dabei, wenn die Blockiereinrichtung mit der Auslöseeinrichtung in definierter Synchronisation zur Betätigung der Positioniereinrichtung betätigbar ist, so daß sich die Funktion der Positioniereinrichtung auf die Wirkungsweise der Blockiereinrichtung definitiv abstimmen läßt und somit eine zuverlässige und sichere Funktion der Anhängekupplung erreichbar ist.

Besonders günstig ist es dabei, wenn die Auslöseeinrichtung beim Übergang von der Fixierstellung in die Lösestellung die Wirkung der Blockiereinrichtung aufhebt, bevor die Positioniereinrichtung beginnt, die Formschlußelemente außer Eingriff zu bringen.

Darüber hinaus ist es vorteilhaft, wenn die Auslöseeinrichtung beim Übergang von der Lösestellung in die Fixierstellung zuerst die Positioniereinrichtung veranlaßt, die Formschlußelemente in Eingriff zu bringen und dann die Blockiereinrichtung wirksam werden läßt.

Hinsichtlich der Ausbildung der Blockiereinrichtung wurden bislang noch keine näheren Angaben gemacht. So sieht ein besonders vorteilhaftes Ausführungsbeispiel vor, daß die Blockiereinrichtung selbstnachstellend ausgebildet ist, das heißt, daß die Blockiereinrichtung nicht nur eine Bewegung des Lagerkopfes über eine bestimmte, vorgegebene Position hinaus blockiert, sondern auch beispielsweise bei auftretendem Verschleiß stets so weit der Position des Lagerkopfes folgt, wie sich diese beim Einnehmen der Fixierstellung oder Spannstellung oder auch im Laufe der Fixierstellung oder Spannstellung einstellt.

Beispielsweise folgt somit die Blockiereinrichtung auch der Position des Lagerkopfes, die sich beispielsweise bei Verschleiß während der einmal eingenommenen Fixierstellung oder Spannstellung einstellt, so daß die Wirkung der Nachstellung nicht nur beim jeweiligen Einnehmen der Fixierstellung oder Spannstellung erfolgt, sondern auch während der einmal eingenommenen Stellung die Blockiereinrichtung selbstnachstellend wirkt und die jeweils sich ergebende maximale Verschiebung in Richtung eines Einnehmens der Fixierstellung oder der Spannstellung festhält.

Noch besser ist es, wenn die Blockiereinrichtung nicht nur selbstnachstellend wirkt, sondern in ihrer wirksamen Stellung mit einer zur Spannkraft beitragenden Kraft auf das Lagerteil wirkt, so daß die Blockiereinrichtung auch gleichzeitig dazu eingesetzt werden kann, zur Spannkraft beizutragen.

Hierzu ist die Blockiereinrichtung vorzugsweise mit einem Kraftspeicher, insbesondere einem mechanischen Kraftspeicher, wie zum Beispiel einem Federkraftspeicher, versehen.

Die Blockiereinrichtung kann beispielsweise so ausgebildet sein, daß sie mit einem Blockierkeil unmittelbar auf den Lagerkörper wirkt.

Beispielsweise ist es denkbar, einen am Lagerteil abgestützten Blockierkeil unmittelbar auf den Lagerkörper wirken zu lassen.

Ein derartiger Blockierkeil könnte beispielsweise zwischen dem Lagerkörper und einer Lagerwange vorgesehen sein.

Eine besonders günstige Anordnung der Blockiereinrichtung sieht jedoch vor, daß diese auf die Kopplungseinrichtung wirkt.

Dieses Anordnen der Blockiereinrichtung ermöglicht es, diese auf einer dem Lagerkopf abgewandten Seite einer Lagerwange des Lagerteils anzuordnen.

Vorzugsweise ist eine derartige Blockiereinrichtung so ausgebildet, daß sie einen Blockierkörper umfaßt, welcher mit der Kopplungseinrichtung und dem Lagerteil zusammenwirkt.

Vorzugsweise ist dabei der Blockierkörper so angeordnet, daß er sich an der die lagerteilseitigen Formschlußelemente tragenden Lagerwange abstützt.

Hinsichtlich der Anordnung der Blockiereinrichtung relativ zur Positioniereinrichtung wurden bislang keine näheren Angaben gemacht. So sieht aufgrund des funktionellen Zusammenwirkens eine vorteilhafte Lösung vor, daß die Blockiereinrichtung und die Positioniereinrichtung auf derselben Seite des Lagerteils angeordnet sind.

Ferner wird ein mechanisches Zusammenwirken der Blockiereinrichtung und der Auslöseeinrichtung dann erleichtert, wenn die Blockiereinrichtung und die Auslöseeinrichtung auf derselben Seite des Lagerteils angeordnet sind.

Hinsichtlich der Anordnung der lagerkopfseitigen Formschlußelemente wurden bislang keine näheren Angaben gemacht. So könnten die lagerkopfseitigen Formschlußelemente prinzipiell an allen Seiten des Lagerkopfes angeordnet sein.

Besonders vorteilhaft ist es, wenn der Lagerkopf eine Im am Fahrzeug montierten Zustand schräg zur Horizontalen verlaufende Lagerbohrung aufweist und wenn die Formschlußelemente auf der Seite des Lagerkopfes angeordnet sind, auf welcher die Lagerbohrung fahrbahnnäher verläuft als auf der anderen.

Diese Lösung hat den Vorteil, daß in diesem Bereich der Lagerkopf eine gröbere radiale Erstreckung zur Lagerbohrung aufweisen kann und somit die Möglichkeit besteht, die Formschlußelemente stabiler und mit größerem Radius zur Lagerbohrung anzuordnen und somit eine steifere Verbindung mit dem Lagerteil zu schaffen.

Femer ist bei einem schräg zur Horizontalen verlaufenden Lagerzapfen der Lagerzapfen zumindest auf seiner fahrbahnnächsten Seite an dem Lagerteil, vorzugsweise an einer Lagerwange desselben gelagert.

Im Falle der Lagerung des Lagerzapfens an zwei Lagerwangen sind vorzugsweise die Formschlußelemente an der Lagerwange angeordnet, die den Lagerzapfen in seinem der Fahrbahn nächstliegenden Endbereich lagert.

Hinsichtlich der Art der Wechselwirkung der Formschlußelemerite in der Arbeitsstellung und der Ruhestellung wurden bislang keine näheren Angaben gemacht.

So ist es besonders vorteilhaft, wenn in der Arbeitsstellung ein Teil der in Fixierstellung stehenden Formschlußelemente In Eingriff ist und ein anderer Teil nicht.

Femer ist vorzugsweise vorgesehen, daß in der Ruhestellung ein Teil der in Fixierstellung stehenden Formschlußelemente in Eingriff ist und ein anderer nicht.

Diese Lösung hat den Vorteil, daß der Winkelabstand zwischen der Ruhestellung und der Arbeitsstellung nicht entsprechend möglichen Rotationssymmetrien, das heißt beispielsweise einer zweizähligen oder dreizähligen oder vierzähligen Symmetrie deren Winkelabstand selbst oder ein Velfaches davon den möglichen Winkelabstand zwischen Arbeitsstellung und Ruhestellung definieren würde, ausgebildet sein muß, sondern daß der Winkelabstand unabhängig von der Anzahl der verwendeten Formschlußelemente festgelegt werden kann.

Eine vorteilhafte Lösung sieht dabei vor, daß am Lagerteil oder am Lagerkopf mindestens ein erstes Formschtußelement angeordnet ist, welches nur in der Arbeitsstellung mit einem Formschlußelement am jeweils anderen Teil in Eingriff steht und mindestens ein zweites Formschlußelement angeordnet ist, welches nur in der Ruhestellung mit einem Formschlußelement am jeweils anderen Teil in Eingriff steht.

Das heißt, daß an einem der beiden Teile zwei Gruppen von Formachlußelementen vorgesehen sind, wobei die eine Gruppe für die Fixierung der Arbeitsstellung und die andere Gruppe für die Fixierung der Ruhestellung vorgesehen ist, während die Formschlußelemente am anderen Teil so ausgebildet sein können, daß sie jeweils alle mit entweder der einen Gruppe oder der anderen Gruppe in Eingriff stehen.

Es ist vorgesehen, daß in der Arbeitsstellung das mindestens eine In Eingriff stehende Formschlußelementenpaar in der Spannstellung mit einer Spannkraft in Einrückrichtung beaufschlagt ist, um den Lagerkopf am Lagerteil spielfrei zu fixieren.

Dieselbe Maßnahmen kann aber auch in der Ruhestellung vorgesehen sein, um auch In dieser eine spielfreie Fixierung zu erreichen.

Um eine möglichst präzise spielfreie Fixierung zu erreichen, ist vorzugsweise vorgesehen, daß in der Arbeitastellung und/oder der Ruhestellung mindestens zwei Formschlußelementenpaare in die Spannstellung bringbar und in der Spannkraft beaufschlagbar sind.

Noch vorteilhafter ist es, wenn in der Arbeitsstellung und/oder der Ruhestellung mindestens drei Formschlußelementenpaare in die Spannstellung bringbar und mit der Spannkraft beaufschlagbar sind.

Das Vorsehen mindestens dreier Formschlußelementenpaare hat den großen Vorteil, daß damit eine stabile Abstützung des Lagerkopfes relativ zum Lagerteil in Form eines Dreibeine realisierbar ist.

Besonders stabil und spielfrei ist die Abstützung des Lagerkopfes dann, wenn dieser in der Arbeitsstellung und in der Spannstellung der Formschlußelementenpaare im wesentlichen über die Formschlußelementenpaare am Lagerteil abgestützt ist, das heißt sonst keine weitere Abstützung des Lagerkopfes mehr erfolgt und somit ausschließlich die Formschlußelementenpaare wirksam sind.

Ferner ist es besonders vorteilhaft, wenn die Position des Lagerkopfes in der Arbeitsstellung und in der Spannstellung der Formschlußelementenpaare im wesentlichen über die Formschlußelementenpaare relativ zum Lagerteil festgelegt ist, wobei insbesondere eine Überbestimmung durch den Lagerzapfen dabei vermieden wird, welcher daher mit ausreichendem Spiel zu versehen ist.

Diese ausschließliche Festlegung des Lagerkopfes relativ zum Lagerteil über die Formschlußelementenpaare verbessert die Spielfreiheit und Präzision der Positionierung des Lagerkopfes.

Das gleiche gilt vorzugsweise auch für die Ruhestellung.

Um zu verhindern, daß der Kugelhals beim Verschwenken von der Arbeitsstellung in die Ruhestellung in einer Stellung stehen bleibt, die keiner der beiden Stellungen entspricht und in dieser Stellung eine scheinbare Fixierung erfolgt, ist vorzugsweise vorgesehen, daß die Kugelhalsfixierung so ausgebildet ist, daß die Formschlußelemente nur in der Arbeitsstellung und der Ruhestellung in formschlüssigen Eingriff bringbar sind. Diese Lösung hat den Vorteil, daß damit jegliches scheinbare Fixieren in einer Zwischenstellung verhindert werden kann und somit sichergestellt ist, daß die erfindungsgemäße Anhängekupplung nur in der Arbeitsstellung und nur in der Ruhestellung überhaupt die Möglichkeit hat, von der Lösestellung in die Fixierstellung oder Spannstellung überzugehen.

Vorzugsweise läßt sich dies dadurch realisieren, daß die Kugelhalsfixierung Führungselemente umfaßt, welche in Zwischenstellungen zwischen der Arbeitsstellung und der Ruhestellung ein Eingreifen der Formschlußelemente verhindern.

Hinsichtlich der Möglichkeiten der Einleitung der Drehbewegung des Lagerkopfes, um den Kugelhals von der Arbeitsstellung in die Ruhestellung oder umgekehrt zu bewegen, sind die unterschiedlichsten Möglichkeiten denkbar.

Beispielsweise wäre es denkbar, über den Lagerbolzen die Drehbewegung einzuleiten.

Besonders vorteilhaft ist es jedoch im Rahmen der erfindungsgemäßen Lösung, wenn der Lagerkopf frei drehbar auf dem Lagerzapfen angeordnet ist.

Dies ermöglicht es beispielsweise, alle möglichen unterschiedlichen Arten der Verschwenkung des Lagerkopfes relativ zum Lagerteil vorzusehen.

Eine vorteilhafte Lösung sieht dabei vor, daß der Kugelhals manuell verschwenkbar ist.

In diesem Fall ist der Lagerkopf lediglich von der Fixierstellung oder Spannstellung in die Lösestellung zu bewegen und in dieser ist aufgrund der frei drehbaren Lagerung des Lagerkopfes ein manuelles Verschwenken möglich.

Alternativ dazu sieht eine vorteilhafte Lösung vor, daß ein elektrisch steuerbarer Schwenkantrieb für den Kugelhals vorgesehen ist.

Dieser elektrisch steuerbare Schwenkantrieb erlaubt ein komfortableres Betreiben der Anhängekupplung und außerdem räumt ein derartig elektrisch steuerbarer Schwenkantrieb die Möglichkeit ein, weitere vorteilhafte Sicherungsfunktionen über eine elektrische Steuerung zu realisieren.

Eine besonders vorteilhafte Lösung sieht dabei vor, daß der Schwenkantrieb einen elektrischen Antriebsmotor aufweist.

Vorzugsweise ist dabei vorgesehen, daß der Schwenkantrieb eine lösbare Kupplung umfaßt, die bei Ausfall des Schwenkantriebs ein manuelles Verschwenken des Kugelhalses zuläßt.

Eine derartige lösbare Kupplung hat den großen Vorteil, daß selbst bei Vorsehen eines elektrischen Antriebsmotors und Ausfall der Elektrik noch die Möglichkeit besteht, den Kugelhals aus jeder Zwischenstellung entweder in die Arbeitsstellung oder in die Ruhestellung zu bewegen.

Eine derartige lösbare Kupplung könnte beispielsweise auch eine Kupplung sein, die sich bei Stromausfall zwangsläufig löst.

Besonders vorteilhaft ist es jedoch, wenn die lösbare Kupplung eine Rutschkupplung ist, die so ausgelegt ist, daß deren Auslösemoment bei manuellem Einwirken auf den Kugelhals erreichbar ist, so daß bei Ausfall des elektrischen Antriebs das Verschwenken des Kugelhalses aus jeder Zwischenstellung in die Arbeitsstellung oder die Ruhestellung manuell realisierbar ist.

Weitere Merkmale und Vorteile sind Gegenstand der nachfolgenden Beschreibung sowie der zeichnerischen Darstellung zweier Ausführungsbeispiele.

In der Zeichnung zeigen:
- Fig. 1: eine Explosionsdarstellung eines ersten Ausführungsbeispiels einer erfindungsgemäßen Anhängekupplung;
- Fig. 2: eine ausschnittsweise perspektivische Darstellung von Kugelhals, Lagerkopf, Kopplungseinrichtung und einem Teil einer Positioniereinrichtung in Arbeitsstellung und Fixierstellung von Formschlußelementen;
- Fig. 3: eine Draufsicht auf die Anhängekupplung des ersten Ausführungsbeispiels mit Blickrichtung von der Rückseite eines Fahrzeugs aus bei in Arbeitsstellung stehendem Kugelhals mit Blick auf die Positioniereinrichtung;
- Fig. 4: eine vergrößerte und teilweise geschnittene Ansicht der Positioniereinrichtung ähnlich Fig. 3 in einer Fixier- oder Spannstellung;
- Fig. 5: eine Ansicht entsprechend Fig. 4 in einer Lösestellung;
- Fig. 6: eine Schnittansicht eines Teils einer erfindungsgemäßen Auslöseeinrichtung;
- Fig. 7: einen Schnitt durch Lagerteil und Lagerkopf ungefähr parallel zu einer Schwenkachse des Lagerkopfes im Bereich eines Formschlußelementenpaares und einer am Lagerteil angeordneten Blockiereinrichtung;
- Fig. 8: eine perspektivische Ansicht des ersten Ausführungsbeispiels der erfindungsgemäßen Anhängekupplung von einer der Blickrichtung gemäß Fig. 3 entgegengesetzter Blickrichtung;

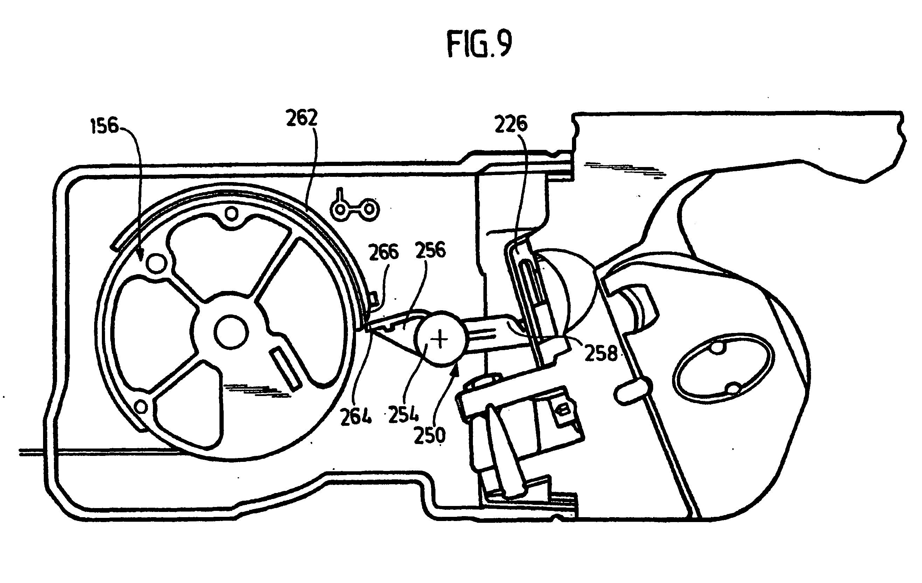

- Fig. 9: einen Schnitt im Bereich einer Betätigungskurve einer Auslöseeinrichtung mit Betätigungswippe für eine Blockiereinrichtung;
- Fig. 10: eine perspektivische Darstellung ähnlich Fig. 2 bei in Fixierstellung stehenden Formschlußelementen und in Ruhestellung stehendem Kugelhals;
- Fig. 11: eine Darstellung ähnlich Fig. 4 bei aus der Spannstellung herausbewegter Fixiereinrichtung;
- Fig. 12: eine Darstellung ähnlich Fig. 6 bei in der in Fig. 11 dargestellten Stellung der Positioniereinrichtung;
- Fig. 13: eine Darstellung ähnlich Fig. 7 bei in der in Fig. 11 dargestellten Stellung der Positioniereinrichtung;
- Fig. 14: eine Darstellung ähnlich Fig. 4 bei über einen Totpunkt hinwegbewegter Kniehebelmechanik der Positioniereinrichtung in einer noch vorhandenen Sperrstellung als Fixierstellung;
- Fig. 15: eine Darstellung ähnlich Fig. 12 bei in der in Fig. 14 dargestellten Stellung der Positioniereinrichtung;
- Fig. 16: eine Darstellung ähnlich Fig. 13 bei in der in Fig. 14 dargestellten Stellung der Positioniereinrichtung;
- Fig. 17: eine Darstellung der Positioniereinrichtung ähnlich Fig. 4 in Lösestellung;
- Fig. 18: eine Darstellung ähnlich Fig. 12 bei in Lösestellung gemäß Fig. 17 stehender Positioniereinrichtung;
- Fig. 19: eine Darstellung ähnlich Fig. 13 bei in Lösestellung gemäß Fig. 17 stehender Positioniereinrichtung;
- Fig. 20: eine Darstellung von Lagerkopf, Kopplungseinrichtung und einem Teil der Positioniereinrichtung bei in Arbeitsstellung stehendem Kugelhals und in Lösestellung stehender Positioniereinrichtung;
- Fig. 21: eine Darstellung von Lagerkopf, Kopplungseinrichtung und einem Teil der Positioniereinrichtung bei in Ruhestellung stehendem Kugelhals und in Lösestellung stehender Positioniereinrichtung;
- Fig. 22: eine Darstellung ähnlich Fig. 20 oder 21 bei in einer Zwischenstellung zwischen der Ruhestellung und der Arbeitsstellung stehendem Kugelhals und in Lösestellung stehender Positioniereinrichtung;
- Fig. 23: eine Explosionsdarstellung eines zweiten Ausführungsbeispiels einer erfindungsgemäßen Anhängekupplung mit elektrischem Auslöseantrieb und elektrischem Schwenkantrieb;
- Fig. 24: eine Draufsicht von oben auf das zweite Ausführungsbeispiel mit entsprechend entferntem Gehäuse und
- Fig. 25: einen teilweisen Schnitt durch Lagerteil, Lagerkopf und Ritzel zum Antrieb des Lagerkopfes beim zweiten Ausführungsbeispiel mit einer durch die Achse des Lagerzapfens und die Achse des Ritzels verlaufenden Schnittebene.

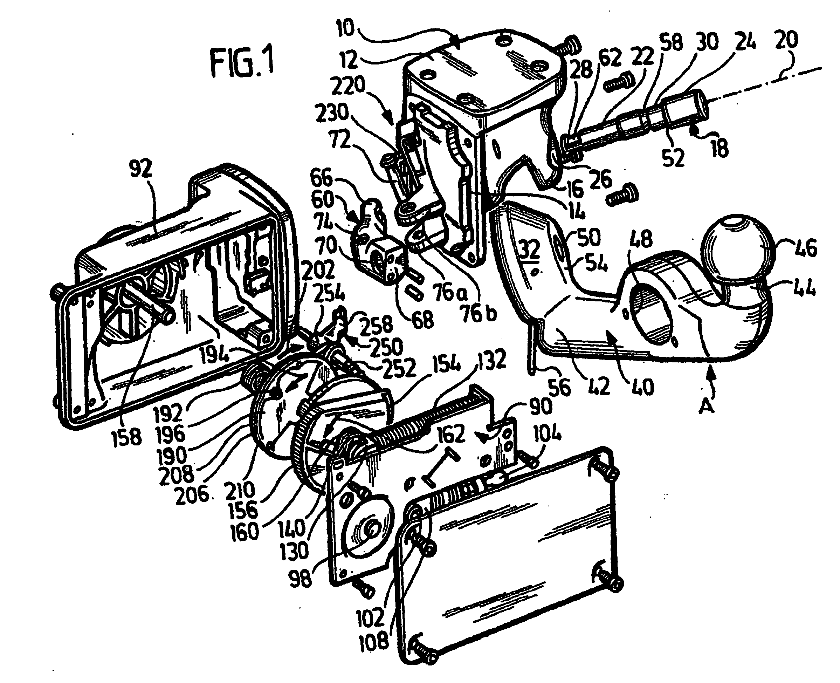

Ein in Fig. 1 dargestelltes erstes Ausführungsbeispiel einer erfindungsgemäßen Anhängekupplung umfaßt ein als Ganzes mit 10 bezeichnetes Lagerteil, welches mit einem Oberteil 12 fahrzeugfest montierbar ist.

Das Lagerteil 10 umfaßt seinerseits eine vom Oberteil 12 nach unten, das heißt im am Kraftfahrzeug montierten Zustand in Richtung einer Fahrbahn verlaufende, erste Lagerwange 14 sowie ein im Abstand von dieser angeordnete und ebenfalls vom Oberteil 12 ausgehende zweite Lagerwange 16.

Sowohl die erste Lagerwange 14 als auch die zweite Lagerwange 16 sind mit Durchbrüchen zum Einsetzen eines Lagerzapfens 18 versehen, dessen Lagerachse 20 bezogen auf eine Längs- und Querrichtung des Kraftfahrzeugs schräg im Raum, insbesondere schräg zu einer Horizontalen und schräg zu einer Längsmittelebene des Kraftfahrzeugs, verlaufend angeordnet ist, wie beispielsweise in der europäischen Patentanmeldung zu DE 196 12 959 beschrieben, auf welches bezüglich den Winkeln für die der Ausrichtung der Lagerachse 20 verwiesen wird.

Der Lagerzapfen 18 weist dabei einen ersten Abschnitt 22 auf, welcher in dem in Fig. 1 nicht erkennbaren Durchbruch in der ersten Lagerwange 14 gelagert ist und einen zweiten Abschnitt 24, welcher in einem Durchbruch 26 der zweiten Lagerwange 16 gelagert ist sowie einen Endabschnitt 28, welcher - wie später noch im Detail erläutert - über die erste Lagerwange 14 auf einer der zweiten Lagerwange 16 gegenüberliegenden Seite übersteht. Durch den schrägen Verlauf des Lagerzapfens 18 liegt der erste Abschnitt 22 der Fahrbahn näher als der zweite Abschnitt 24 des Lagerzapfens 18.

Zwischen dem ersten Abschnitt 22 und dem zweiten Abschnitt 24 des Lagerzapfens 18 ist ein Lagerabschnitt 30 vorgesehen, welcher zur drehbaren Lagerung eines Lagerkopfes 32 eines als Ganzes mit 40 bezeichneten Kugelhalses dient, welcher im Bereich eines Endes 42 in den Lagerkopf 32 übergeht, und im Bereich eines anderen Endes 44 eine Kupplungskugel 46 trägt.

Vorzugsweise ist der Kugelhals 40 im Bereich zwischen seinen Enden 42 und 44 noch mit einer Aufnahme 48 für eine elektrische Steckverbindung versehen.

Zur schwenkbaren Lagerung des Lagerkopfes 32 ist dieser mit einer Lagerbohrung 50 versehen, die der Lagerzapfen 18 durchsetzt, und zwar so, daß der Lagerabschnitt 30 in der Lagerbohrung 50 liegt.

Um wie noch später im einzelnen beschrieben, mit dem Lagerzapfen 18 den Lagerkopf 32 in Richtung der ersten Lagerwange 14 beaufschlagen zu können, ist zwischen dem Lagerabschnitt 30 und dem zweiten Abschnitt 24 des Lagerzapfens 18 ein Flansch 52 vorgesehen, mit welchem der Lagerkopf 32 auf seiner der ersten Wange 14 abgewandten Seite 54 beaufschlagbar ist. Dieser Flansch 52 ist vorzugsweise durch eine Stufe gebildet, die dadurch entsteht, daß der zweite Abschnitt 24 einen größeren Durchmesser als der Lagerabschnitt 30 aufweist.

Ferner ist zur in Richtung der Lagerachse 20 unverschieblichen jedoch frei drehbaren Führung des Lagerkopfes 32 am Lagerzapfen 18 noch ein den Lagerkopf 32 durchsetzender und die Lagerbohrung 50 tangierender Stift 56 vorgesehen, welcher in eine umlaufende Nut 58 im Bereich des Lagerabschnitts 30 eingreift und damit den Lagerkopf 32 in axialer Richtung relativ zum Lagerzapfen 18 festlegt.

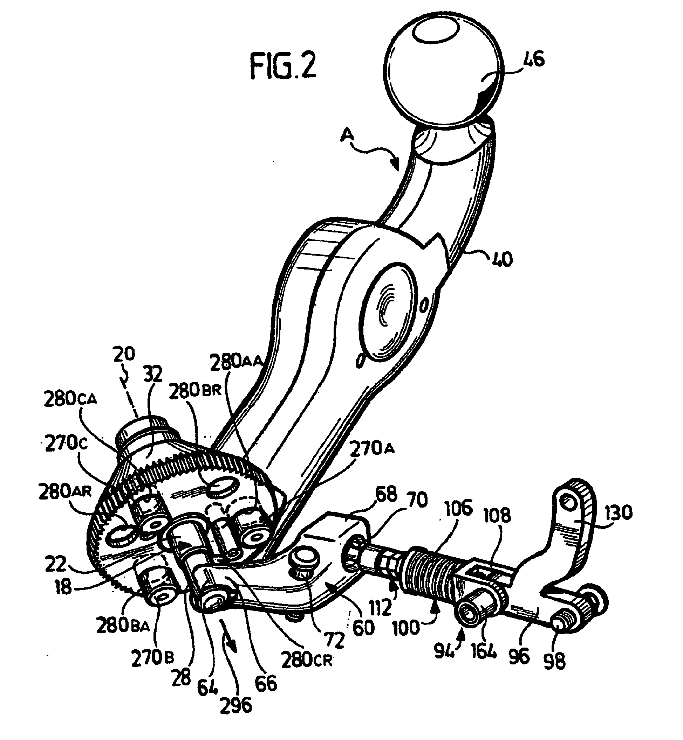

Der Endabschnitt 28 des Lagerzapfens 18 ist mit einem als Ganzes mit 60 bezeichneten Umlenkhebel gekoppelt, und zwar vorzugsweise dadurch, daß der Endabschnitt 28, wie außerdem in Fig. 2 erkennbar, mit Vertiefungen 62 versehen ist, in welche Finger 64 einer an einem Ende des Umlenkhebels 60 gebildeten Gabel 66 eingreifen, so daß der Endabschnitt 28 in der Gabel 66 geführt ist und zwar so, daß eine in Richtung der Lagerachse 20 im wesentlichen unverschiebliche Fixierung der Gabel 66 in den Vertiefungen 62 und somit relativ zum Lagerzapfen 18 erfolgt.

Der Umlenkhebel 60 weist ferner ein der Gabel 66 gegenüberliegendes Ende 68 auf, welches mit einer Aufnahme 70 versehen ist, über welche eine Einwirkung auf den Umlenkhebel 60 erfolgt.

Ferner ist der Umlenkhebel 60 mittels eines Bolzens 72, der eine Bohrung 74 im Umlenkhebel 60 durchsetzt, schwenkbar an der ersten Lagerwange 14 gelagert, und zwar auf der der zweiten Lagerwange 16 gegenüberliegenden Seite. Vorzugsweise ist dabei der Bolzen 72 durch im Abstand voneinander angeordnete Lagervorsprünge 76a, 76b gehalten, wobei der Umlenkhebel 60 zwischen diesen Lagervorsprüngen 76a und 76b liegt und somit auch durch diese geführt ist.

Wie in Fig. 2 dargestellt, bildet der Lagerzapfen 18 zusammen mit dem Umlenkhebel 60 eine als Ganzes mit 80 bezeichnete Kopplungseinrichtung, mit welcher der Lagerkopf 32 in Richtung der Lagerachse 20 verschiebbar ist, wobei gleichzeitig der Lagerzapfen 18 noch die Aufgabe der frei drehbaren Lagerung des Lagerkopfes 32 um die Achse 20 als Schwenkachse übernimmt.

Über die Aufnahme 70 am Ende 68 des Umlenkhebels 60 wirkt auf die Kopplungseinrichtung 80 eine als Ganzes mit 90 bezeichnete Positioniereinrichtung, die in einem von der ersten Lagerwange 14 gehaltenen Gehäuse 92 angeordnet ist.

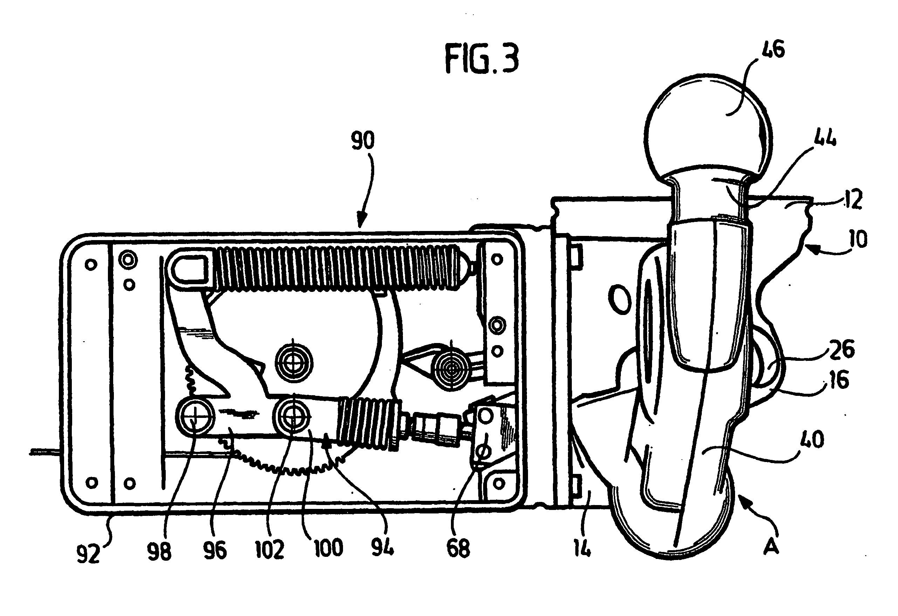

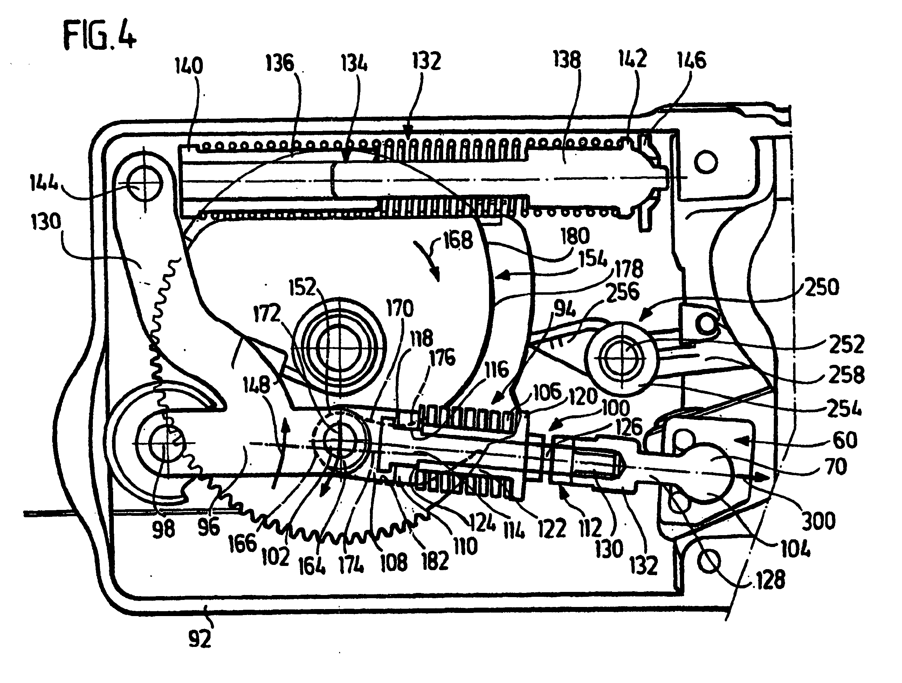

Die Positioniereinrichtung 90, wie insbesondere in Fig. 3 und 4 dargestellt, umfaßt eine Kniehebelmechanik 94, welche durch einen ersten Hebel 96, der drehbar an einem fest am Gehäuse 92 angeordneten Lager 98 gelagert ist, sowie einen zweiten Hebel 100, der über ein Kniegelenk 102 mit dem ersten Hebel 96 verbunden ist, gebildet ist wobei das Kniegelenk 102 vorzugsweise an einem dem Lager 98 gegenüberliegenden Ende des ersten Hebels 96 angeordnet ist.

Der zweite Hebel 100 erstreckt sich ausgehend von dem Kniegelenk in Richtung der Aufnahme 70 des Umlenkhebels 60 und greift in diese mit einer Kugel 104 ein, wobei die Kugel 104 in der Aufnahme 70 des Umlenkhebels 60 derart festgelegt ist, daß eine gelenkige, ansonsten aber auch Zug- und Druckeinwirkungen von der Kniehebelmechanik 94 auf den Umlenkhebel 60 übertragende Verbindung besteht, wie in Fig. 4 dargestellt.

Darüber hinaus ist der zweite Hebel 100 der Kniehebelmechanik 94, wie ebenfalls in Fig. 4 dargestellt, durch ein Tellerfederpaket 106 längenveränderlich, wobei der zweite Hebel 100 einen ersten Hebelkörper 108 umfaßt, der sich ausgehend von dem Kniegelenk 102 erstreckt und an einem dem Kniegelenk 102 gegenüberliegenden Ende eine Lageraufnahme 110 für einen zweiten Hebelkörper 112 aufweist, welcher mit einem Kopf 114 in einer Führungsbohrung 116 der Lageraufnahme 110 geführt ist und durch einen Flansch 118, welcher auf einer dem Kniegelenk 102 gegenüberliegenden Seite der Lageraufnahme 110 liegt in seiner Bewegbarkeit vom Kniegelenk 102 weg im Sinne einer Verlängerung des zweiten Hebels 100 begrenzt ist.

Das Tellerfederpaket 106 stützt sich dabei einerseits auf einer dem Kniegelenk 102 gegenüberliegenden Seite der Lageraufnahme 110 ab und andererseits an einem Flanschring 120, der fest, jedoch einstellbar mit dem zweiten Hebelkörper 112 verbunden ist.

Damit wirkt das Tellerfederpaket 106 in Richtung einer Verlängerung des zweiten Hebels 100, dadurch, daß es bestrebt ist, den zweiten Hebelkörper 112 vom Kniegelenk 102 wegzubewegen, wobei diese Verschiebung andererseits durch den Flansch 118 des Kopfes 114 begrenzt ist, der an der Lageraufnahme 110 auf einer dem Kniegelenk 102 zugewandten Seite anliegt.

Dadurch ist der zweite Hebel 100 aber auch in seiner Länge verkürzbar, allerdings gegen die Wirkung des Tellerfederpakets 106, wobei die Verkürzung des zweiten Hebels 100 durch eine mit dem Flanschring 120 fest verbundene Hülse 122 begrenzt ist, die das Tellerfederpaket 106 durchsetzt und bei maximaler Verkürzung mit ihrer Endseite 124 an der Lageraufnahme 110 anliegt.

Darüber hinaus ist der zweite Hebelkörper 112 noch in seiner Länge fest einstellbar, und zwar dadurch, daß dieser einen den Kopf 114 tragenden und sowohl die Hülse 122 als auch das Tellerfederpaket 106 sowie den Flanschring 120 durchsetzenden ersten Hebelabschnitt 126 aufweist, sowie einen zweiten, die Kugel 104 tragenden Hebelabschnitt 128, wobei beispielsweise der erste Hebelabschnitt 126 mit einem Ende 130 in eine Aufnahme 132 des zweiten Hebelabschnitts 128 eingreift und beispielsweise durch ein Gewinde festlegbar ist.

Ferner ist der erste Hebel 96 der Kniehebelmechanik 94 mit einem Arm 130 versehen, welcher sich vorzugsweise quer zum ersten Hebel 96 erstreckt und auf welchen eine einen Druckkraftspeicher darstellende Wendelfeder 132 einwirkt.

Die Wendelfeder 132 ist durch eine längenvariable Führung 134, umfassend ein erstes Führungselement 136 und ein zweites Führungselement 138, geführt und zwischen einem Flansch 140 des ersten Führungselements 136 und einem Flansch 142 des zweiten Führungselements 138 eingespannt ist.

Über das über ein Gelenk 144 mit dem Arm 130 verbundene erste Führungselement 136 wirkt die Wendelfeder 132 auf den Arm 130 und somit den ersten Hebel 96, wobei sich dabei die Wendelfeder 132 über das zweite Führungselement 138 an einem fest am Gehäuse 92 vorgesehenen Gegenlager 146 abstützt.

Aufgrund der Ausbildung der Wendelfeder 132 als Druckfeder hat diese stets das Bestreben, sich zu verlängern und bewirkt dabei über den Arm 130, daß der erste Hebel 96 die Tendenz hat, sich in Richtung 148 um das Lager 98 zu verschwenken. Dieses Verschwenken des ersten Hebels 96 in der Richtung 148 wird in einer Fixierstellung oder Spannstellung der Positioniereinrichtung 90, deren Zweck nachfolgend erläutert wird, begrenzt in einer in Fig. 4 dargestellten Übertotpunktstellung der Kniehebelmechanik 94, in diesem Ausführungsbeispiel durch eine als Ganzes mit 150 bezeichnete Auslöseeinrichtung, und zwar durch einen Endabschnitt 152 einer Kurvenbahn 154, die an einem Stellrad 156 angeordnet ist.

Das Stellrad 156 ist seinerseits über einen Lagerzapfen 158 drehbar in dem Gehäuse 92 gelagert und wird durch eine Drehfeder 160, die einerseits am Gehäuse 92 angreift und andererseits auf das Stellrad 156 wirkt, in einer Richtung 162 drehend beaufschlagt, so daß das Stellrad 156 die Kurvenbahn 154 derart dreht, daß ein am Kniegelenk 102 angeordneter Bahnfolger 164, beispielsweise ausgebildet als Rolle, bei ausschließlicher Einwirkung der Drehfeder 160 auf das Stellrad 156 an dem Endabschnitt 152 anliegt, wobei die Drehung des Stellrades 156 dabei durch einen sich an den Endabschnitt 152 anschließenden Abschluß 166 der Kurvenbahn 154 begrenzt.

Eine Drehung des Stellrades 156 in einer Richtung 168, die entgegensetzt der Richtung 162 verläuft, bewirkt nun, daß die Positioniereinrichtung 90 die Spann- oder Fixierstellung verläßt und der Endabschnitt 152 sich vom Bahnfolger 164 weg bewegt, so daß ein sich an den Endabschnitt 152 anschließender erster Kurvenabschnitt 170 den Bahnfolger 164 derart beaufschlagt, daß die Kniehebelmechanik 94 sich in Richtung 172 in die Streckstellung, angedeutet durch die gestrichelte Linie 174 bewegt, die auch der Totpunktstellung der Kniehebelmechanik 94 entspricht. In dieser Streckstellung ist der zweite Hebel 100 durch Zusammendrücken des Tellerfederpakets 106 verkürzt.

Ein weiterer, sich an den ersten Kurvenabschnitt 152 anschließender zweiter Kurvenabschnitt 176 der Kurvenbahn 154 wirkt weiter auf den Bahnfolger 164 in der Richtung 172 ein und bewegt die Kniehebelmechanik 94 über die Streckstellung 174 hinaus. Während dieser Bewegung läßt das Tellerfederpaket 126 eine Verlängerung des zweiten Hebels 100 zu, so daß der Abstand der Kugel 104 von dem Lager 98 unverändert bleiben kann. Bei weiterer Bewegung des Bahnfolgers 164 in der Richtung 172 längt sich der zweite Hebel 100 durch die Wirkung des Federpakets bis zu einer Stellung, in welcher der zweite Hebel 100 die maximale Länge, festgelegt durch das Tellerfederpaket 106 und den mit der Lageraufnahme 110 zusammenwirkenden Flansch 118 des Kopfes 114, erreicht hat. Dies ist ungefähr die Stellung, die den dem ersten Kurvenabschnitt 170 gegenüberliegenden Ende des zweiten Kurvenabschnitts 176 entspricht.

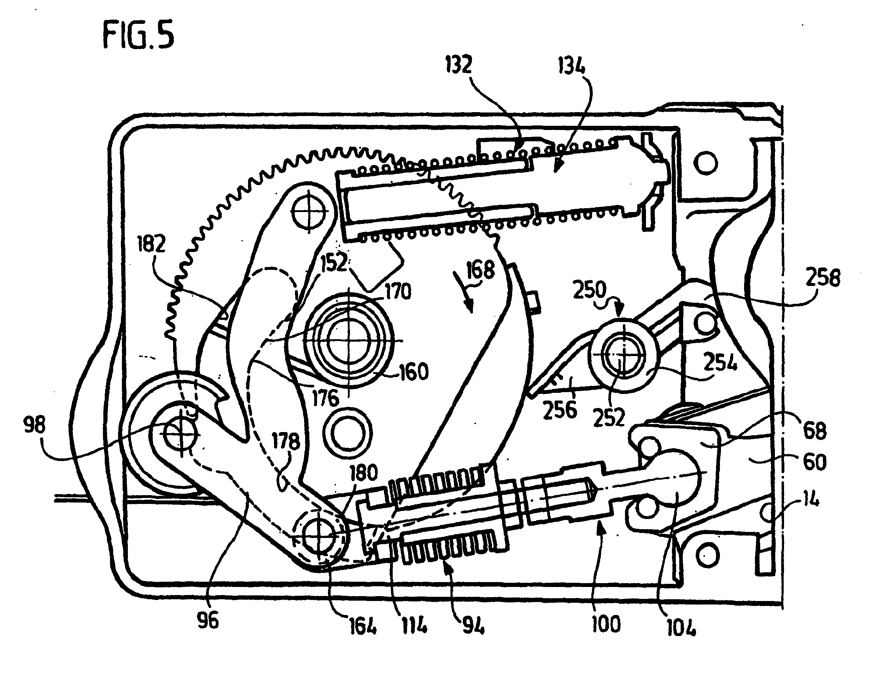

Dann wird ein sich an den zweiten Kurvenabschnitt 176 anschließender dritter Kurvenabschnitt 178 wirksam, welcher den Bahnfolger 164 in der Richtung 172 und weiter entgegen der Kraft der Wendelfeder 132 bewegt, wobei sich dann der Abstand zwischen der Kugel 104 und dem Lager 98 verkürzt. Dies geht beispielsweise so weit, bis eine in Fig. 5 dargestellte Stellung erreicht ist, in welcher der Bahnfolger 164 in einem Endbereich 180 des dritten Kurvenabschnitts 178 steht. In dieser Stellung ist die Wendelfeder 132 in ihrer maximal zusammengedrückten Stellung, welche beispielsweise durch die Führung 134 vorgegeben ist. Die Verkürzung des Abstandes zwischen der Kugel 104 und dem Lager 98 führt nun dazu, daß die Kniehebelmechanik 94 das Ende 68 des Umlenkhebels 60 von der ersten Lagerwange 14 weg bewegt und somit der Umlenkhebel 60 sich mit der Gabel 66 in Richtung der ersten Lagerwange 14 bewegt und damit den Lagerzapfen 18 in Richtung der zweiten Lagerwange verschiebt, woraus ebenfalls eine Verschiebung des Lagerkopfes 32 in Richtung der zweiten Lagerwange 16 resultiert.

Diese Bewegung der Kniehebelmechanik 94 erfordert eine aktive Drehung des Stellrades 156 in der Richtung 168, wobei die Kurvenbahn 154 mit dem Bahnfolger 164 zusammen ein Kurvengetriebe mit einer Kraftverstärkung bildet.

Fällt die Einwirkung auf das Stellrad 156 weg, so dreht sich unter der Wirkung der Drehfeder 160 das Stellrad 156 in Richtung 162 zurück, wobei die Kurvenbahn 154 mit den bereits benannten Abschnitten an den Bahnfolger 164 entlanggleitet und somit bewirkt, daß der Bahnfolger 164 aufgrund der Kraftwirkung der Wendelfeder 132 in die in Fig. 4 dargestellte Übertotpunktstellung zurückkehrt, in welcher der Bahnfolger 164 einerseits am Endabschnitt 152 der Kurvenbahn 154 und andererseits am Abschluß 166 derselben anliegt.

Ferner ist längs der Kurvenabschnitte 176 und 170 eine diesen folgende Gegenkurve 182 vorgesehen, welche in der Fig. 4 dargestellten Stellung den Bahnfolger 164 in der in Fig. 4 dargestellten Stellung festlegt und verhindert, daß dieser sich selbsttätig in Richtung 172 bewegen kann, ohne daß das Stellrad 156 gedreht wird.

Damit ist eine Sicherung der Kniehebelmechanik 94 in der in Fig. 4 dargestellten Übertotpunktstellung, die der Spannstellung als eine Fixierstellung entspricht, erreicht.

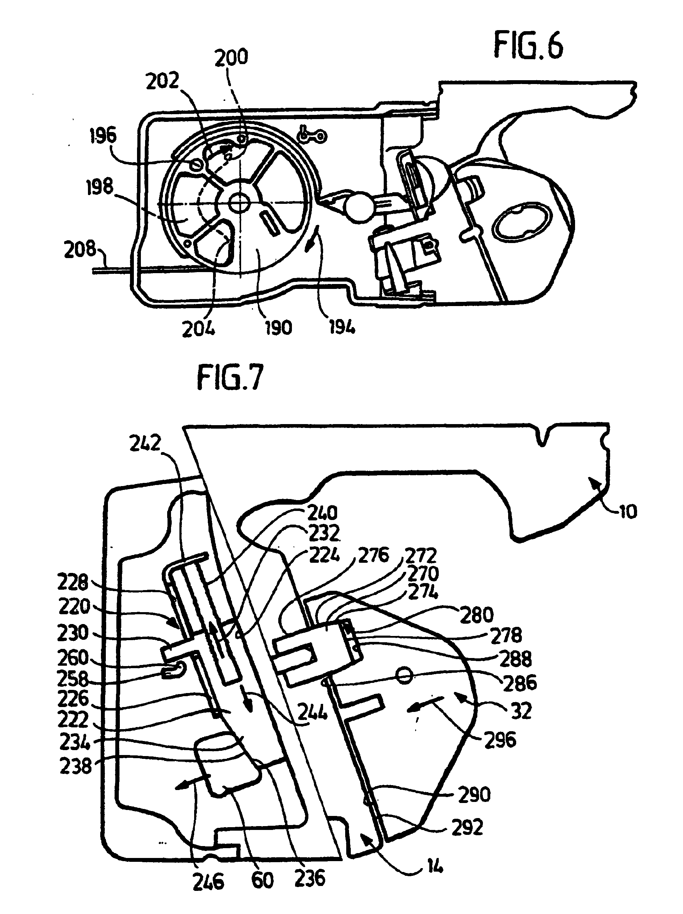

Zum Drehen des Stellrades 156 umfaßt die Auslöseeinrichtung 150 noch zusätzlich ein Antriebsrad 190, welches ebenfalls auf dem Lagerzapfen 158 am Gehäuse 92 gelagert ist und mit einer Drehfeder 192 in einer der Richtung 162 entsprechenden Richtung 194 beaufschlagt ist, wobei das Antriebsrad 190 mit einem Zapfen 196 in eine in Fig. 6 dargestellte bogenförmig um den Lagerzapfen 158 in dem Stellrad 156 vorgesehene Vertiefung 198 eingreift und dabei in der nicht beaufschlagenden Stellung nahe eines Endes 200 anliegt. Die Vertiefung 198 gewährt eine freie Drehbarkeit des Antriebsrades 190 relativ zum Stellrad 156 in einer Richtung 202, wobei dieser Drehbarkeit die Drehfeder 192 entgegenwirkt. Bei Erreichen des Endes 200 der Vertiefung 198 erfolgt eine Mitnahme des Stellrades 156 durch das Antriebsrad 190 in der Richtung 168, um die Kniehebelmechanik 94 von der in Fig. 4 dargestellten Übertotpunktstellung oder Spannstellung bis die in Fig. 5 dargestellte Lösestellung zu bewegen.

Die Bogenlänge der Vertiefung 198 von einem Anfang 204 bis zum Ende 200 entspricht dabei dem Bogen, der erforderlich ist, um das Antriebsrad 190 in die Ausgangsstellung zurückkehren zu lassen, während das Stellrad 156 aus nachfolgend noch im einzelnen dargelegten Gründen in einer der Fig. 5 entsprechenden Lösestellung verbleibt, in welcher der Endbereich 180 des dritten Kurvenabschnitts 178 auf den Bahnfolger 164 wirkt.

Um manuell auf das Antriebsrad 190 einwirken zu können, ist dies mit einer umfänglich verlaufenden Aufnahmenut 206 für ein Zugseil 208 versehen, welches mit einem Ende 210 an dem Antriebsrad 190 festgelegt ist und aus dem Gehäuse 92 herausgeführt ist, so daß durch Zug an dem Zugseil 208 ein Drehen des Antriebsrades 190 in Richtung 202 erfolgen kann.

Ferner umfaßt die erfindungsgemäße Anhängekupplung in einer Weiterbildung eine als Ganzes mit 220 bezeichnete und in Fig. 1, 7 und 8 erkennbare Blockiereinrichtung, die einen Verschiebekeil 222 aufweist, welcher an der der zweiten Lagerwange 16 abgewandten Seite der ersten Lagerwange 14 angeordnet ist und längs einer Gleitfläche 224, die an dieser Seite der ersten Lagerwange 14 angeordnet ist verschiebbar ist.

Der Verschiebekeil 222 ist insgesamt zwischen der Gleitfläche 224 und einem an der ersten Lagerwange 14 gehaltenen Verschiebekeilgehäuse 226 geführt, welches zusätzlich noch mit einer Ausnehmung 228 versehen ist, aus welcher ein an den Verschiebekeil 222 angeformter Betätigungszapfen 230 hervorsteht.

Der Verschiebekeil 222 ist dabei insgesamt in einer Richtung 232 vor und zurück verschiebbar, welche ungefähr quer zur Längserstreckung des Umlenkhebels 60 verläuft und umfaßt einen Keilabschnitt 234, welcher, wie in Fig. 7 dargestellt, in einen Zwischenraum zwischen der Gleitfläche 224 und einer der Gleitfläche 224 zugewandten Rückseite 236 des Umlenkhebels 60 einschiebbar ist, wobei der Keilabschnitt 234 an der Rückseite 236 mit einer Keilfläche 238 anliegt, um den Umlenkhebel 60 in der in Fig. 7 dargestellten Stellung zu sichern, welche der Spannstellung entspricht, in welcher die Positioniereinrichtung 90 mit der Kugel 104 die Aufnahme 70 am Ende 68 des Umlenkhebels 60 derart beaufschlagt, daß das Ende 68 in seiner der ersten Lagerwange 14 nächstliegenden Stellung steht und somit die Gabel 66 den größtmöglichen Abstand von der ersten Lagerwange 14 aufweist.

Damit blockiert der Verschiebekeil 222 in seiner in Fig. 7 dargestellten, zwischen die Rückseite 236 und die Gleitfläche 224 der ersten Lagerwange 14 eingreifenden Stellung eine Bewegung des Umlenkhebels 60 mit seinem nahe der Gabel 66 liegenden und die Rückseite 236 aufweisenden Abschnitt in Richtung der ersten Lagerwange 14 und verhindert somit, daß der Lagerzapfen 18 und mit diesem auch der Lagerkopf 32 von der ersten Lagerwange 14 weg in Richtung der Lösestellung bewegbar ist.

Der Verschiebekeil 222 ist dabei mit einer Druckfeder 240 beaufschlagt, welche sich an einem Oberteil 242 des Verschiebekeilgehäuses 226 abstützt und derart auf den Verschiebekeil 222 einwirkt, daß dieser stets das Bestreben hat, mit dem Keilabschnitt 234 möglichst weit in den Zwischenraum zwischen der Rückseite 236 des Umlenkhebels 60 und der Gleitfläche 224 einzugreifen. Ferner bewirkt die keilförmig zur Gleitfläche 224 verlaufende Keilfläche 238 aufgrund der Beaufschlagung des Verschiebekeils 222 in der Richtung 244 noch eine Kraftwirkung auf die Rückseite 236 des Umlenkhebels 60 mit einer Druckkraft 246 und somit eine auf den Umlenkhebel 60 nahe der Gabel 66 wirkende und damit auch eine zu einer Beaufschlagung des Lagerzapfens 18 mit einer der Spannkraft beitragende Kraft.

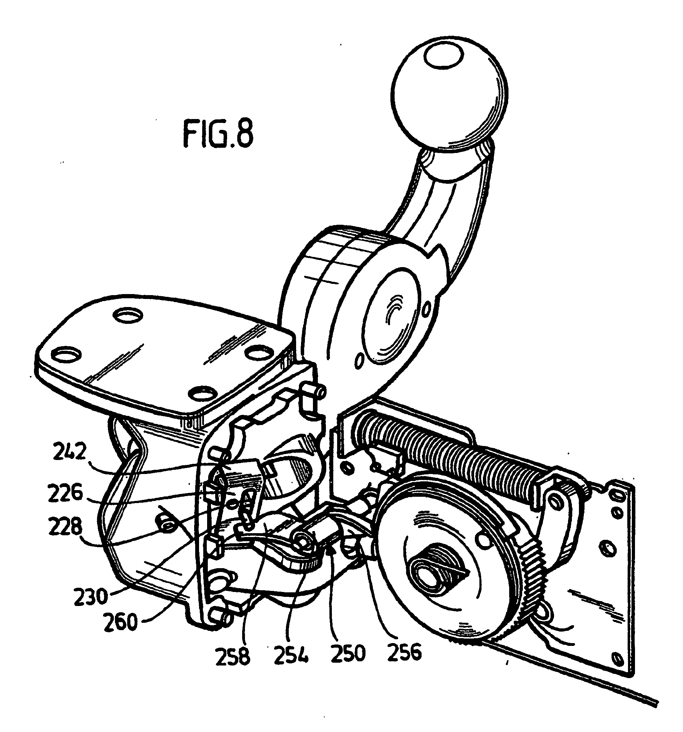

Um nun den Verschiebekeil 222 in einer der Kraftrichtung 244 der Druckfeder 240 entgegengesetzten Richtung verschieben zu können, ist der Betätigungszapfen 230 durch eine als Ganzes mit 250 bezeichnete Betätigungswippe betätigbar, die schwenkbar auf einem Lagerbolzen 252 im Gehäuse 292 gelagert ist und zwei von einem Lagerkörper 254 ausgehende Arme 256 und 258 aufweist, wobei der Arm 258 sich ausgehend vom Lagerkörper 254 in Richtung des Betätigungszapfen 230 erstreckt und mit einem Endbereich 260 auf den Betätigungszapfen 230 wirken kann, während der Arm 256 sich, wie in Fig. 4 und 8 dargestellt, in Richtung des Stellrades 156 erstreckt.

Die Betätigungswippe 250 wirkt dabei mit einer an dem Stellrad 156 vorgesehenen Betätigungskurve 262 zusammen, wobei die Betätigungskurve 262 ein Ende 264 des Arms 256 beaufschlagen kann.

Vorzugsweise weist die Betätigungskurve 262 einen Anfangsabschnitt 266 auf, welcher bei unbetätigter Betätigungswippe 250 in geringem Abstand von dem Ende 264 steht, wobei unmittelbar nach Beginn der Drehung des Stellrades 156 aus der Spannstellung heraus in Richtung 168 eine Beaufschlagung des Endes 264 der Betätigungswippe 250 durch die Betätigungskurve 262 erfolgt, die zu einem Verschieben des Verschiebekeils 222 entgegengesetzt zur Kraftrichtung 244 der Druckfeder 240 führt und somit den Keilabschnitt 234 aus dem Zwischenraum zwischen der Rückseite 236 des Umlenkhebels 60 und der Gleitfläche 224 herausführt, so daß der Umlenkhebel 60 mit der Gabel 66 in Richtung der ersten Lagerwange 14 bewegbar ist.

Um den Lagerkopf 32 festlegen zu können, ist die erste Lagerwange 14 mit mindestens einem lagerteilseitigen Formschlußelement 270 versehen, welches einen zylindrischen Formschlußabschnitt 272 und einen konischen Formschlußabschnitt 274 aufweist, die aufeinanderfolgend angeordnet sind, wobei sich der zylindrische Formschlußabschnitt 272 an einen zylindrischen Verankerungsabschnitt 276 des lagerteilseitigen Formschlußelements 270 anschließt und sich im Anschluß an den zylindrischen Formschlußabschnitt 272 der konische Formschlußabschnitt 274 bis zu einer Stirnfläche 278 des lagerteilseitigen Formschlußelements 270 erstreckt.

Mit diesem mindestens einen lagerteilseitigen Formschlußelements 270 wirkt mindestens ein lagerkopfseitiges Formschlußelement 280 zusammen, welches vorzugsweise in Lagerkopf 32 in Form einer Vertiefung eingeformt ist, die einen zylindrischen Wandabschnitt als zylindrischen Formschlußabschnitt 282 aufweist, und einen konischen Wandabschnitt als konischen Formschlußabschnitt 284, der sich bis zu einem Boden 288 des lagerkopfseitigen Form-schlußelements 280 erstreckt, so daß ausgehend von dem Boden 288 der konische Formschlußabschnitt 284 folgt, auf welchen seinerseits der zylindrische Formschlußabschnitt 282 folgt, der sich bis zu einem Rand 286 der Vertiefung erstreckt.

Die das lagerkopfseitige Formschlußelement 280 bildende Vertiefung geht dabei von einer Stirnseite 290 des Lagerkopfes 230 aus, welche einer der zweiten Lagerwange 16 zugewandten Seite 292 der Lagerwange 14 zugewandt ist, wobei die Stirnseite 290 und die Seite 292 der Lagerwange 14 vorzugsweise in allen Stellungen des Lagerkopfes 32 ungefähr parallel zueinander verlaufen.

Das lagerteilseitige Formschlußelement 270 ist dabei vorzugsweise so angeordnet, daß sich der zylindrische Formschlußabschnitt 272 über der Seite 292 der ersten Lagerwange 14 erhebt, während der Verankerungsabschnitt 276 in eine als von der Seite 292 ausgehende Vertiefung ausgebildete Aufnahme 294 in der ersten Lagerwange 14 eingesetzt ist und beispielsweise durch zusätzliche Mittel, wie beispielsweise eine Schraube, fixiert ist.

Vorzugsweise bilden dabei der Verankerungsabschnitt 276 und die Aufnahme 294 eine Passung zur spielfreien präzisen Aufnahme des lagerteilseitigen Formschlußelements 270.

Wie in Fig. 7 dargestellt, können das lagerteilseitige Formschlußelement 270 und das lagerkopfseitige Formschlußelement 280 zur Fixierung des Lagerkopfes relativ zur ersten Lagerwange 14 des Lagerteils 10 ineinander greifen.

Bei vollständigem Ineinandergreifen der Formschlußelemente 270, 280 liegen die konischen Formschlußabschnitte 274 und 284 aneinander an und bewirken bei Beaufschlagung des Lagerkopfes 32 mit einer Spannkraft 296 in Richtung der ersten Lagerwange 14 eine spielfreie Fixierung des Lagerkopfes 32 relativ zum Lagerteil 10 gegenüber einer Drehung um die Lagerachse 20, da in azimutaler Richtung einander gegenüberliegende Bereiche der miteinander wechselwirkenden konischen Formschlußabschnitte 274 und 284 das Bestreben haben, aufgrund der Einwirkung der Spannkraft 296 in entgegengesetzten Drehrichtungen zu wirken und somit eine spielfreie Verspannung gegen ein Spiel in Drehrichtung bewirken.

Ferner dienen die zylindrischen Formschlußabschnitte 272 und 282 der Formschlußelemente 270 bzw. 280 dazu, daß selbst dann, wenn aufgrund eines auf den Lagerkopf 32 wirkenden großen Drehmoments, beispielsweise einer beim Betrieb auftretenden Drehmomentspitze, die konischen Formschlußelemente 274 und 284 aufgrund ihres Konuswinkels eine Relativbewegung des Lagerkopfes 32 entgegengesetzt zur Spannkraft 296 und somit weg von der ersten Lagerwange 14 ausführen, die zu einem Außereingriffbringen der Formschlußelemente 270 und 280 führen könnte, noch eine Formschlußverbindung bestehen bleibt.

Die zylindrischen Formschlußabschnitte 272 und 282 kommen dann zum Tragen, wenn aufgrund der Konuswinkel die konischen Formschlußabschnitten 274 und 284 den Lagerkopf 32 von der ersten Lagerwange 14 wegbewegt haben. Die zylindrischen Formschlußabschnitte 272 und 282 bewirken dann, daß die Festlegung der Formschlußelemente 270 und 280 relativ zueinander nicht mehr über die konischen Formschlußabschnitte 274 und 284 erfolgt, sondern nur noch über die zylindrischen Formschlußabschnitte 272 und 282, die aufgrund ihres nicht vorhandenen Konuswinkels selbst bei großen Kräften keine Kraftkomponente erzeugen, die zu einem Entfernen des Lagerkopfes 32 von der ersten Lagerwange 14 führen könnte. Somit bilden die zylindrischen Formschlußabschnitte 272 und 282 eine Sicherung gegen ein Außereingriffkommen der Formschlußelemente 270 und 280 bei Drehmomentbelastungen des Lagerteils 32.

Vorzugsweise sind bei dem erfindungsgemäßen Ausführungsbeispiel um den Lagerzapfen 18 herum insgesamt drei lagerteilseitige Formschlußelemente 270A, 270B und 270C vorgesehen, die in definierten Winkelabständen voneinander angeordnet sind und, wie in Fig. 2 dargestellt, in der in Fig. 2 dargestellten Arbeitsstellung A des Kugelhalses 40 in der Arbeitsstellung A zugeordnete lagerkopfseitige Formschlußelemente 280AA, 280BA und 280CA eingreifen können.

Diese lagerkopfseitigen Formschlußelemente 280AA bis 280CA sind nur dazu vorgesehen, mit den lagerteilseitigen Formschlußelementen 270A bis 270C in der Arbeitsstellung A des Kugelhalses 40 Formschlußelementenpaare zu bilden.

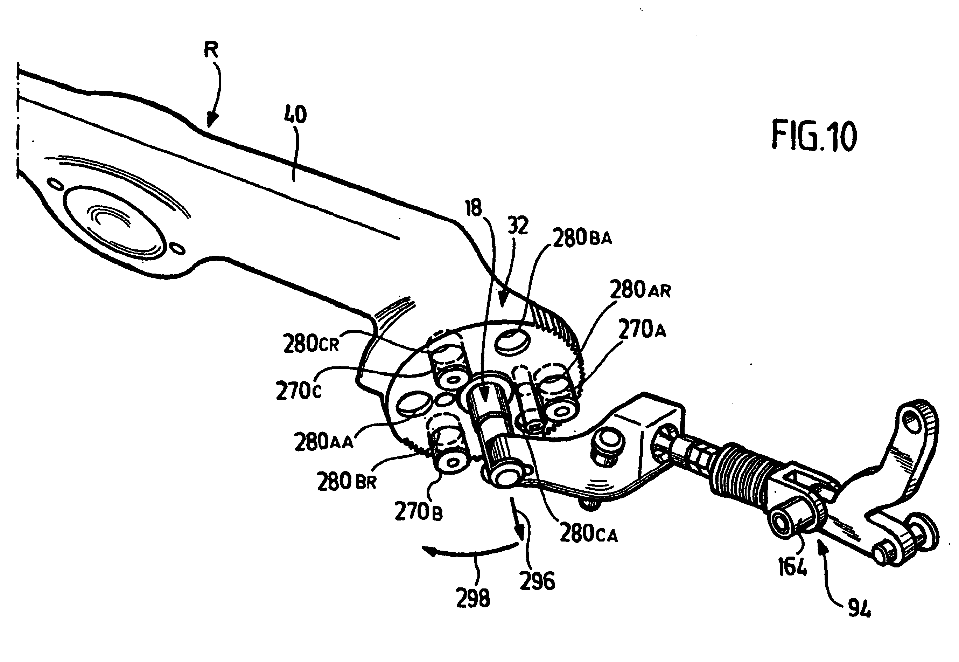

Zur Fixierung des Kugelhalses 40 in einer Ruhestellung R sind an dem Lagerkopf 32 weitere lagerkopfseitige Formschlußelemente, nämlich die lagerkopfseitigen Formschlußelemente 280AR, 280BR und 280CR vorgesehen, die in der Ruhestellung R, wie in Fig. 10 dargestellt, mit den Formschlußelemente 270A bis 270C Formschlußelementenpaare zur Festlegung des Lagerkopfes 32 bilden. Wie in Fig. 10 erkennbar, ist die Ruhestellung R des Kugelhalses 40 durch eine Drehbewegung des Lagerkopfes 32 mitsamt dem Kugelhals 40 in Richtung 296 um einen Winkel von größenordnungsmäßig 180° erreichbar.

Wie aus Fig. 2 und Fig. 10 erkennbar, sind die Formschlußelemente 270A, 270B und 270C mit den Formschlußelementen 280AA, 280BA und 280CA oder den Formschlußelementen 280AR, 280BR und 280CR dann in Eingriff und bewirken eine spielfreie Fixierung des Lagerkopfes 34 durch Einwirkung der Spannkraft 296 auf den Lagerzapfen 18 wenn eine entsprechende Beaufschlagung des Lagerzapfens 18 erfolgt.

Diese Beaufschlagung des Lagerzapfens 18 erfolgt einerseits durch die in Fig. 2 und Fig. 10 durch die Kniehebelmechanik 94 dargestellte Positioniereinrichtung 90, wobei, um zur Spannkraft 296 beizutragen, die Kniehebelmechanik 94 in ihrer Spannstellung steht, in welcher der Bahnfolger 164, wie in Fig. 4 dargestellt, zwischen dem Endabschnitt 152 der Kurvenbahn 154 und der Gegenkurve 182 in einer Übertotpunktstellung fixiert ist. Wie in Fig. 4 bereits erkennbar, ist in dieser Stellung der Flansch 118 von der Lageraufnahme 110 abgehoben, so daß der zweite Hebel 100 gegenüber seiner maximal möglichen Stellung verkürzt ist und damit das Tellerfederpaket 106 komprimiert ist, so daß das Tellerfederpaket 106 mit einer Druckkraft 300 beaufschlagt, welche durch Umlenkung zur Spannkraft 296 auf den Lagerzapfen 18 beiträgt.

Die Wendelfeder 132 hält in der Spannstellung gemäß Fig. 4 nur den Bahnfolger 164 in Anlage an dem Endabschnitt 152 der Kurvenbahn 154, trägt jedoch nicht selbst zur Druckkraft 300 bei.

Darüber hinaus wirkt, wie bereits erläutert, der Verschiebekeil 222 mit seiner Keilfläche 238 ebenfalls auf den Umlenkhebel 60 und beaufschlagt diesen mit einer Druckkraft 246, die ebenfalls zur auf den Lagerzapfen 18 wirkenden Spannkraft 296 beiträgt.

Damit ist sowohl in der Arbeitsstellung A als auch in der Ruhestellung R durch die Formschlußelemente 270 und 280 eine spielfreie Fixierung des Lagerkopfes 32 gegenüber der ersten Lagerwange 14 realisierbar, wobei die Position des Lagerkopfes 32 und deren spielfreie Fixierung ausschließlich durch die Formschlußelemente 270 und 280 erfolgt und somit der Lagerkopf 32 nur über die Formschlußelemente 270 und 280 positionsdefiniert an dem Lagerteil 10 abgestützt ist, da die Stirnseite 290 des Lagerkopfes 32 in geringem Abstand von der dieser zugewandten Seite 292 der ersten Lagerwange 14 steht.

Vorzugsweise besteht im Bereich des Lagerzapfens 18 ein ausreichend großes Spiel, so daß die Positionsfestlegung in der Spannstellung ausschließlich durch die Formschlußelemente 270 und 280 erfolgt.

In dieser Spannstellung, insbesondere in der Arbeitsstellung A, werden auf den Kugelhals 40 und somit den Lagerkopf 32 einwirkende und beispielsweise der Spannkraft 296 entgegenwirkende Kräfte über die Blockiereinrichtung 220 aufgenommen und direkt auf der dem Lagerkopf 32 gegenüberliegenden Seite in die erste Lagerwange 14 eingeleitet, so daß die Positioniereinrichtung 90 lediglich die Aufgabe hat, zur Spannkraft 296 beizutragen, jedoch nicht so ausgelegt sein muß, daß sie beispielsweise aufgrund von Betriebsbelastungen in der Arbeitsstellung A auftretende Kräfte aufnehmen können muß.

Darüber hinaus erlauben die konischen Formschlußabschnitte 274 und 284 aufgrund der stets anliegenden Spannkraft 296 eine auch über lange Betriebszyklen dauerhaft spielfreie Positionierung des Lagerkopfes 32 relativ zur ersten Lagerwange 14, da die stets anliegende Spannkraft 296 auch bei Verschleißerscheinungen im Bereich der konischen Formschlußabschnitte 274 und 284 stets nachstellend wirkt und somit im Verschleißfalle beispielsweise bewirkt, daß die lagerteilseitigen Formschlußelemente 270 noch weiter in die lagerkopfseitigen Formschlußelemente 280 eingreifen.

Gleichzeitig bewirkt auch die Blockiereinrichtung 22 aufgrund des durch die Druckfeder 240 beaufschlagten Verschiebekeils 222 eine Nachstellung der Blockierung, so daß selbst bei Auftreten von Verschleiß im Bereich der Keilfläche 238 oder der Rückseite 236 des Umlenkhebels 60 weiter die Spannkraft 296 aufrechterhalten und die Rückseite 236 des Umlenkhebels 60 spielfrei gegen die erste Lagerwange 14 verspannt wird, um der Spannkraft 296 entgegenwirkende Kräfte unmittelbar vom Umlenkhebel 60 in die erste Lagerwange 14 auf der dem Lagerkopf 32 gegenüberliegenden Seite einzuleiten.

Damit ist eine besonders stabile und biege- und verwindungssteife Positionierung des Lagerkopfes 32 an der ersten Lagerwange 14 realisierbar, da die erste Lagerwange 14 quasi zwischen der auf diese wirkenden Blockiereinrichtung 220 einerseits und dem über die Formschlußelemente 270 und 280 wirkenden Lagerkopf 32 andererseits eingespannt ist, so daß auf die erste Lagerwange 14 in der Spannstellung im wesentlichen Druckkräfte einwirken.

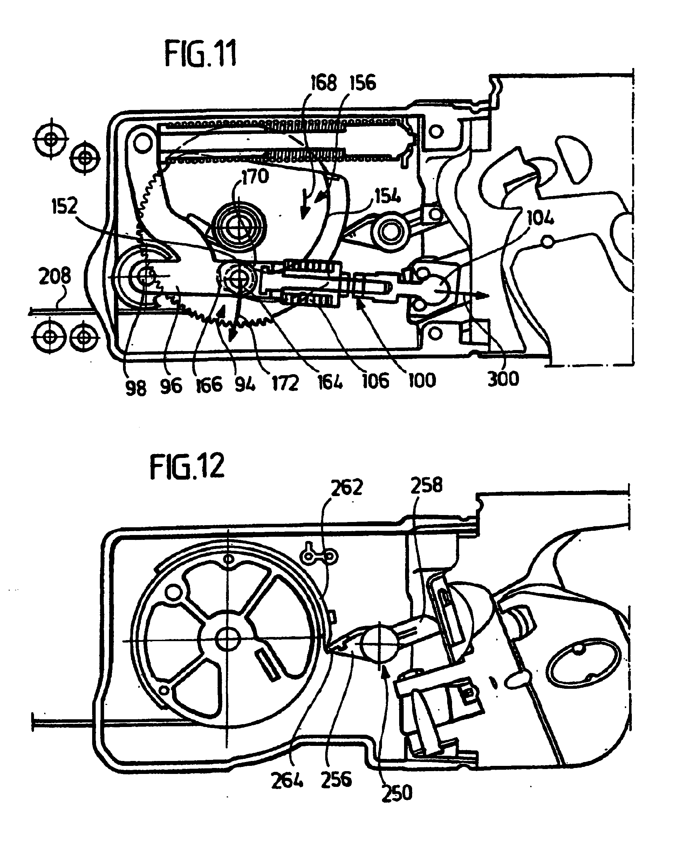

Ein Lösen der in Fig. 2, 4 und 7 dargestellten Spannstellung ist durch Ziehen am Zugseil 208 erreichbar, wodurch zunächst ein Drehen des Antriebsrades 190 erfolgt, so lange, bis der Zapfen 196 sich bis zum Ende 200 der Vertiefung 198 bewegt hat. In dieser Stellung erfolgt eine Mitnahme des Stellrades 156 durch das Antriebsrad 190. Diese Mitnahme bewirkt nun, daß, wie in Fig. 11 dargestellt, sich die Kurvenbahn 154 bewegt und der Bahnfolger 164 nicht mehr durch den Endabschnitt 152 beaufschlagt ist, sondern beispielsweise durch den ersten Kurvenabschnitt 170, der bereits ein Bewegen des Bahnfolgers 164 in der Richtung 172 bewirkt hat, so daß die Kniehebelmechanik 94 ihre durch den Abschluß 166 festgelegte Endstellung verläßt und sich in Richtung der Streckstellung 174 oder Totpunktstellung bewegt. Dabei erfolgt eine Verkürzung des zweiten Hebels 100 und weitere Komprimierung des Tellerfederpakets 106, wodurch der Druck auf die Kugel 104 weiter ansteigt, so daß die Druckkraft 300 auch ansteigt und somit der Beitrag der Positioniereinrichtung 90 zur Spannkraft 296 steigt.

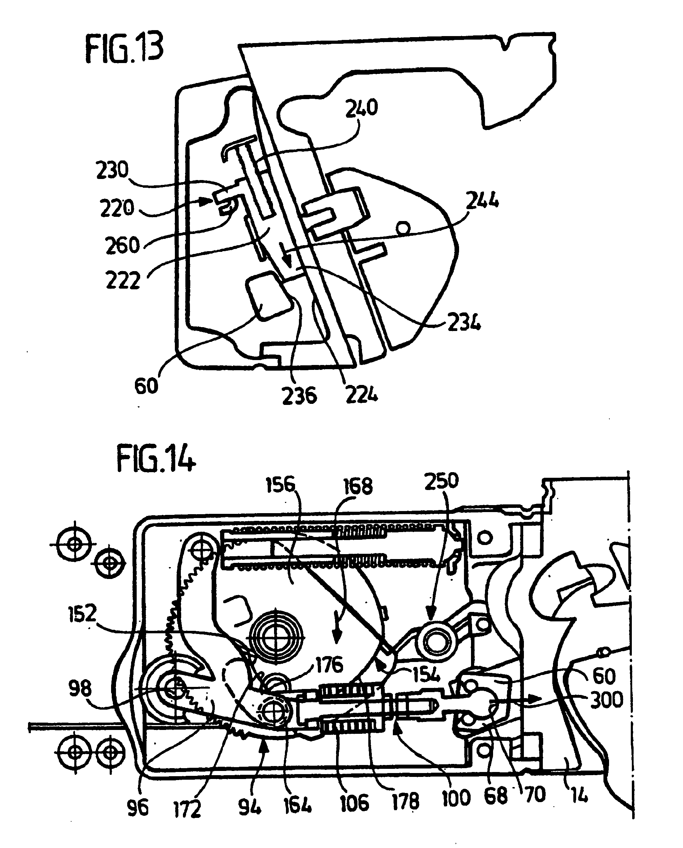

Allerdings bewirkt bereits eine geringe Drehung des Stellrades 156, daß die mit diesem verbundene Betätigungskurve 262, wie in Fig. 12 dargestellt, das Ende 264 der Betätigungswippe 250 beaufschlagt, wodurch die Betätigungswippe 250 gedreht wird und mit dem Endbereich 260 des Arms 258 bereits auf den Betätigungszapfen 230 der Blockiereinrichtung 220 wirkt, und bereits bei dieser geringen Drehung den Verschiebekeil 222 entgegen der Druckkraft 244 bewegt, so daß der Keilabschnitt 234 beginnt aus dem Zwischenraum zwischen der Rückseite 236 des Umlenkhebels 60 und der Gleitfläche 224 unter Komprimierung der Druckfeder 240 herauszuwandern, wie in Fig. 13 dargestellt.

Damit entfällt die von dem Verschiebekeil 222 aufgebrachte Druckkraft 246 und somit deren Beitrag zur Spannkraft 296.

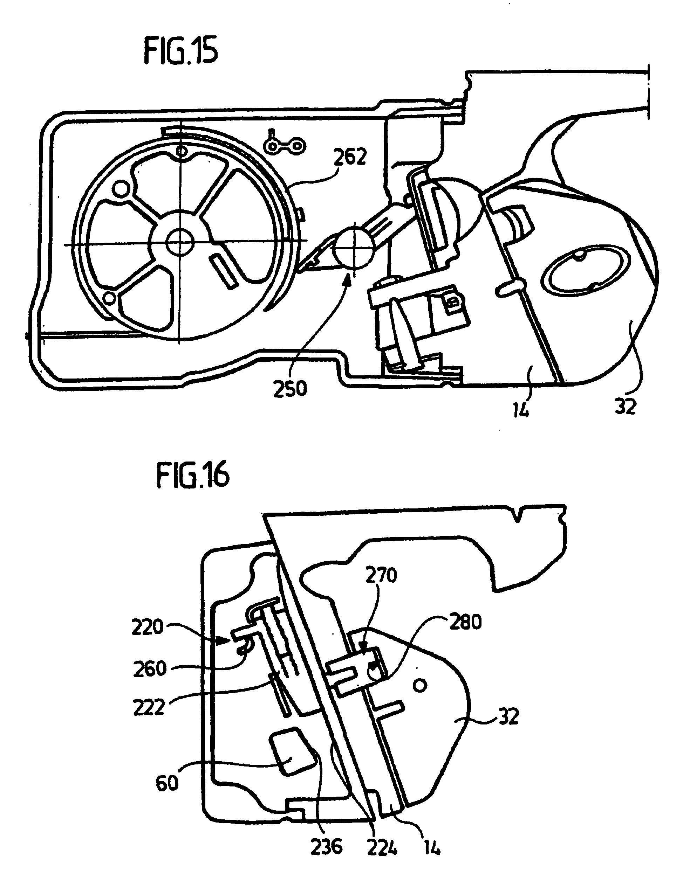

Wird mittels des Antriebsrades 190 das Stellrad 156 weiter in der Richtung 168 gedreht, so bewirkt dies, wie in Fig. 14 dargestellt, zunächst ein Weiterbewegen der Kurvenbahn 154 derart, daß der Bahnfolger 164 am Übergang zwischen dem zweiten Kurvenabschnitt 176 und dem dritten Kurvenabschnitt 178 steht. In dieser Stellung ist, wie in Fig. 14 erkennbar, die Druckkraft 300 auf den Umlenkhebel 60 ungefähr Null, da der zweite Hebel 100 seine maximale Längung erreicht hat und das Tellerfederpaket wirkungslos ist. Dennoch steht der Umlenkhebel 60 mit seinem die Aufnahme 70 bildenden Ende 68 in seiner der ersten Lagerwange 14 nächstliegenden Stellung, so daß, wie in Fig. 16 erkennbar, der Lagerkopf 32 stets noch derart nahe an der ersten Lagerwange 14 steht, daß die Formschlußelemente 270 und 280 in Eingriff stehen und deren konische Formschlußabschnitte 274 und 284 noch aneinander anliegen, allerdings fehlt - wie bereits dargelegt - die Spannkraft 296.

Diese Stellung ist noch eine Fixierstellung, da die Formschlußelemente noch voll in Eingriff sind, und wird als Sperrstellung bezeichnet.

Darüber hinaus ist, wie in Fig. 15 und 16 dargestellt, durch die Betätigungskurve 262 in der Sperrstellung die Betätigungswippe 250 derart verkippt, daß deren Endbereich 260 den Verschiebekeil 222 der Blockiereinrichtung 220 völlig aus dem Zwischenraum zwischen der Rückseite 236 des Umlenkhebels 60 und der Gleitfläche 224 herausgezogen hat, so daß der Umlenkhebel 60 mit seinem nahe der Gabel 66 liegenden Bereich in Richtung der ersten Lagerwange 14 frei verschwenkt werden kann.

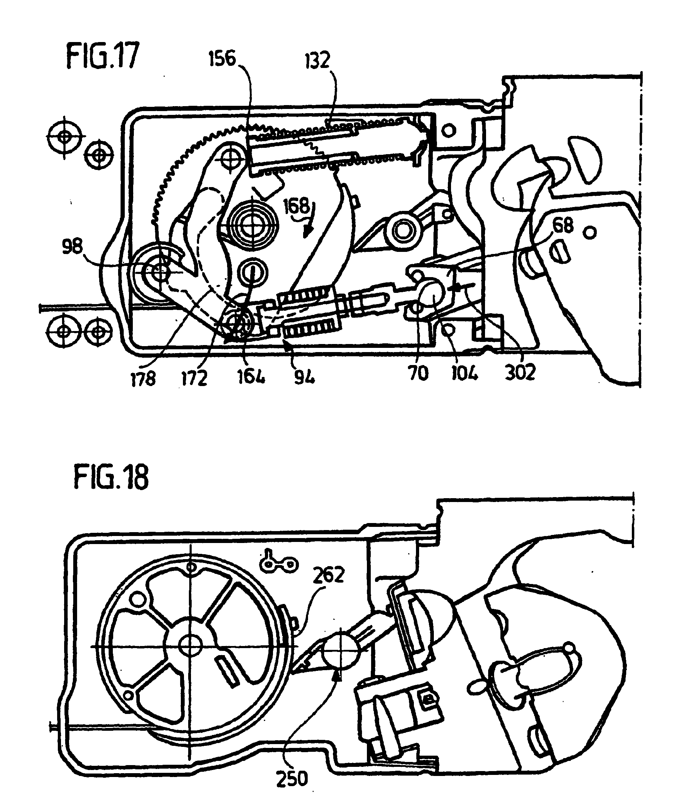

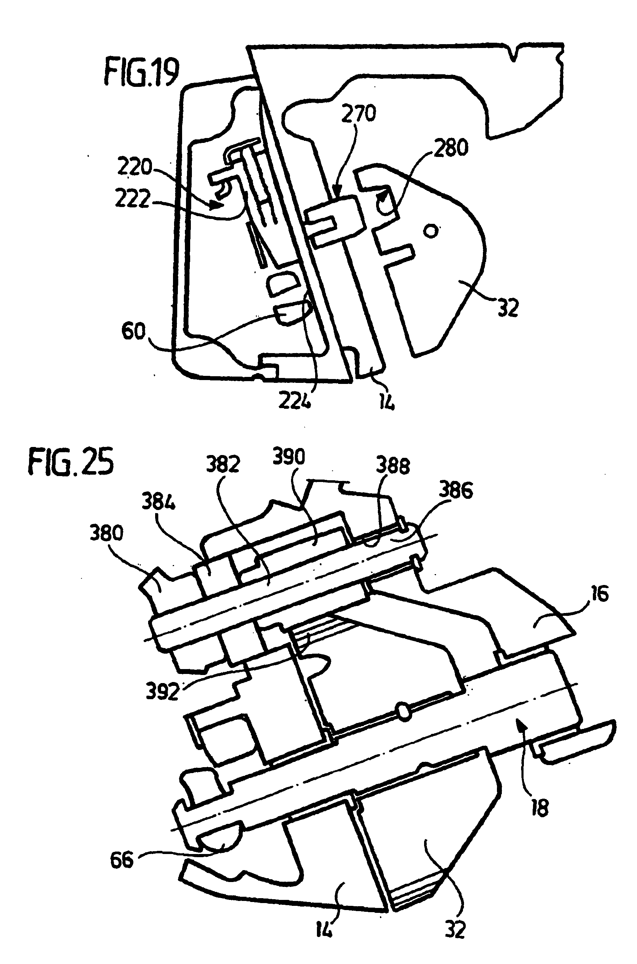

Ein Verschwenken des Umlenkhebels 60 erfolgt bei einem Weiterdrehen des Stellrades 156 in Richtung 168, wobei, wie in Fig. 17 dargestellt, der dritte Kurvenabschnitt 178 wirksam wird und den Bahnfolger 164 in der Richtung 172 unter Verkürzung des Abstandes zwischen dem Lager 98 und der Kugel 104 bewegt, so daß die Kniehebelmechanik 94 mit einer Zugkraft 302 auf die Aufnahme 70 am Ende 68 des Umlenkhebels 60 wirkt und dadurch den Lagerzapfen 18 in Richtung der zweiten Lagerwange 16 verschiebt, wodurch der Lagerkopf 32 sich von der ersten Lagerwange 14 wegbewegt, wie in Fig. 19 dargestellt, so daß die Formschlußelemente 270 und 280 außer Eingriff kommen. In dieser Lösestellung bezeichneten Stellung ist der Lagerkopf 32 um den Lagerzapfen 18 frei drehbar.

Ferner ist, wie in Fig. 18 und 19 dargestellt, durch die Wirkung der Betätigungskurve 262 auf die Betätigungswippe 250 die Blockiereinrichtung 220 wirkungslos, da der Verschiebekeil 222 aus dem Zwischenraum zwischen dem Umlenkhebel 60 und der Gleitfläche 224 herausbewegt ist und somit der Umlenkhebel 60 bis nahe an die Gleitfläche 224 bewegt werden kann.

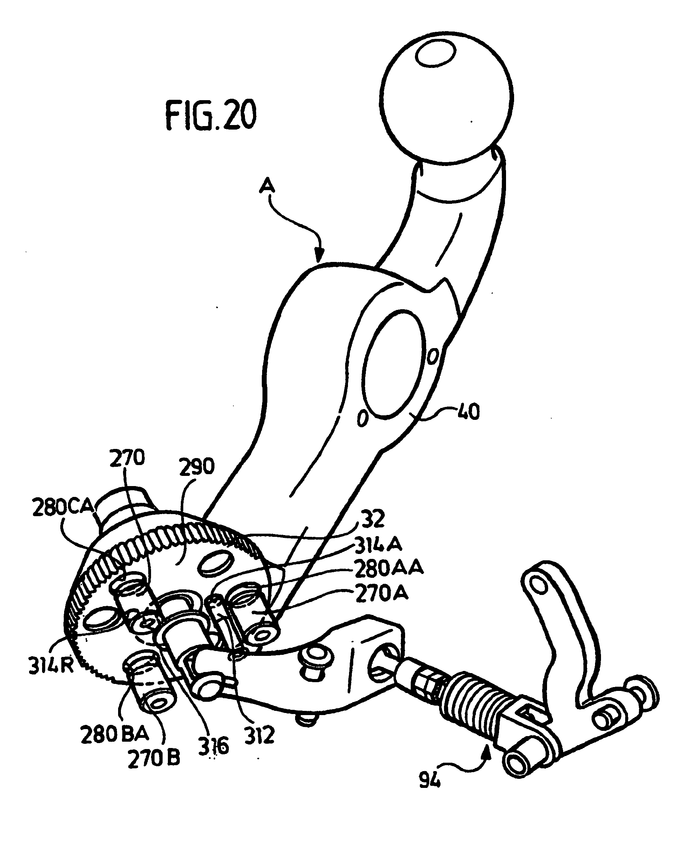

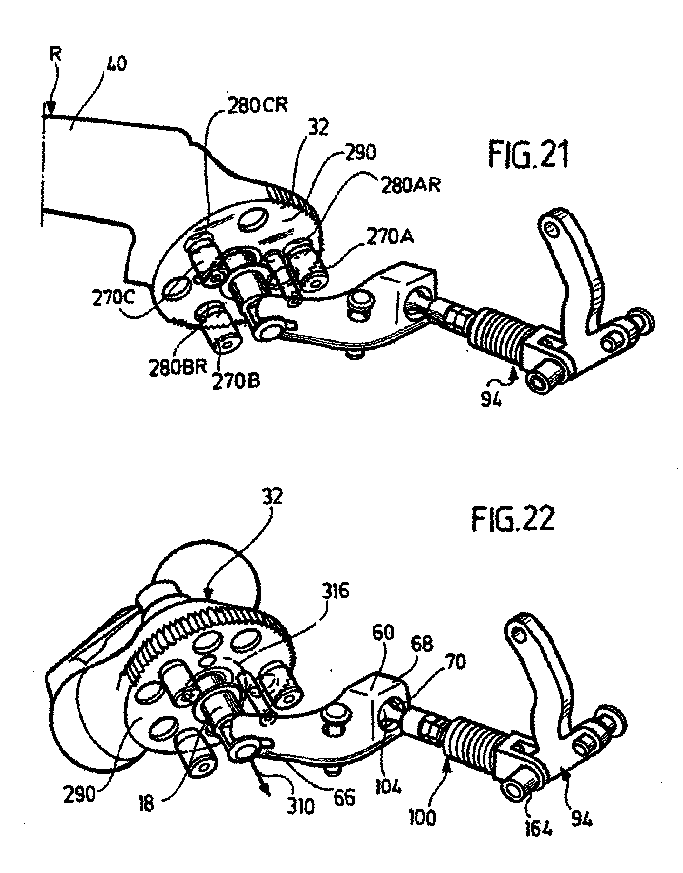

Diese Lösestellung kann, wie in Fig. 20 und Fig. 21 dargestellt, sowohl in der Arbeitsstellung A des Kugelhalses 40 oder der Ruhestellung R des Kugelhalses 40 erreicht werden, wobei die Kniehebelmechanik 94 allein die Position des Lagerkopfes 32 relativ zu den lagerteilseitigen Formschlußelementen 270A bis 270C festlegt und insbesondere die entsprechenden Formschlußelemente 270, 280 außer Eingriff hält.

Wird bei in Arbeitsstellung A oder Ruhestellung R stehendem Kugelhals 40 in dieser Lösestellung der Kniehebelmechanik 94 der Zug auf das Zugseil 208 beendet, so dreht das Antriebsrad 190 aufgrund der Wirkung der Drehfeder 192 in seine Ausgangsstellung zurück und das Stellrad 156 folgt ebenfalls aufgrund der Wirkung der Drehfeder 160 unmittelbar nach, und folglich bewegt die Wendelfeder 132 die Kniehebelmechanik 94 wieder in ihre Spannstellung, dargestellt in Fig. 4, zurück, so daß in der beschriebenen Weise wieder die Spannkraft 296 wirkt.

Erfolgt allerdings in der Spannstellung der Kniehebelmechanik 94, wie in Fig. 20 im Zusammenhang mit der Arbeitsstellung und in Fig. 21 im Zusammenhang mit der Ruhestellung dargestellt ist, ein Verschwenken des Lagerkopfes 32 durch Verschwenken des Kugelhalses 40 entweder von der Arbeitsstellung A in Richtung der Ruhestellung R oder von der Ruhestellung R in Richtung der Arbeitsstellung A, so stehen die Formschlußelemente 280AA, 280BA und 280CA oder die Formschlußelemente 280AR, 280BR und 280CR nicht mehr den Formschlußelementen 270A, 270B gegenüber, wie in Fig. 22 dargestellt.

Wird in dieser Zwischenstellung die Einwirkung auf das Zugseil 208 beendet, so dreht das Antriebsrad 190 aufgrund der Wirkung der Drehfeder 192 in ihre Ausgangsstellung zurück, wobei der Zapfen 196 in der Vertiefung 198 in Richtung des Anfangs 204 zurückwandert, während das Stellrad 156 in der Lösestellung verbleibt, da der Lagerkopf 32 sich nicht in Richtung der ersten Lagerwange 14 bewegen kann. Somit bleibt auch der Lagerzapfen 18 in dieser Lösestellung stehen und der zwangsgesteuert durch den Lagerzapfen 18 bewegbare Umlenkhebel 60 ebenfalls, der seinerseits wiederum aufgrund der zwangssteuernden Verbindung zwischen der Kopplungseinrichtung 80 und der Positioniereinrichtung 90 die Kniehebelmechanik 94 in der Lösestellung hält, wobei allerdings die Wendelfeder 132 mit einer Rückstellkraft wirksam ist. Eine Drehung des Lagerkopfes 32 um die Achse 20 als Schwenkachse ist nun so lange möglich, bis alle Formschlußelemente 270A, 270B und 270C wieder entsprechend angeordneten Formschlußelementen 280 gegenüberstehen.

Vorzugsweise lassen sich dabei die Formschlußelemente 280AA, 280BA und 280CA sowie die Formschlußelemente 280AR, 280BR und 280CR in derartigen Winkelabständen anordnen, daß alle drei Formschlußelemente 270A, 270B und 270C lediglich in der Arbeitsstellung A oder in der Ruhestellung R in korrespondierende Formschlußelemente 280 eingreifen können.

Dabei kann jedoch nicht verhindert werden, daß einzelne der Formschlußelemente 270A, 270B und 270C bei dieser Drehbewegung einem der Formschlußelemente 280 gegenüberstehen und somit die Tendenz haben, mit diesem in Eingriff zu kommen, da in der Lösestellung die Positioniereinrichtung 90 durch die von der Wendelfeder 132 aufgebrachte Rückstellkraft über die Kniehebelmechanik 94 und den Umlenkhebel 60 mit der Verriegeiungskraft oder Rückstellkraft 310 auf den Lagerzapfen 18 wirkt und dieser den Lagerkopf 32 mit der entsprechenden Rückstellkraft 310 beaufschlagt.

Aus diesem Grund ist, wie in Fig. 20 bis 22 dargestellt, die erste Lagerwange 14 mit einem Führungskörper 312 versehen, welcher über die dem Lagerkopf 32 zugewandte Seite 292 der ersten Lagerwange 14 übersteht und in der Arbeitsstellung A in eine diesen unwirksam machende Vertiefung 314A eintauchen kann und in der Ruhestellung R in eine diesen unwirksam machende Vertiefung 314R.

Zwischen den Vertiefungen 314A und 314R weist der Lagerkopf 32 auf seiner Stirnseite 290 eine Stützbahn 316 auf, mit welcher der Lagerkopf 32 stirnseitig auf den Führungskörper 312 in allen Zwischenstellungen zwischen der Arbeitsstellung A und der Ruhestellung R aufliegt, wobei der Führungskörper 312 derart dimensioniert ist, daß sich der Lagerkopf 32 um den Lagerzapfen 18 drehen kann, ohne daß eines der Formschlußelemente 270 in eines der Formschlußelemente 280 auch nur geringfügig eintaucht.

Dabei wirkt die Stützfläche 316 mit der Rückstellkraft auf den Führungskörper 312, so daß das Zusammenwirken derselben sowohl den Lagerkopf 32 als auch die Kopplungseinrichtung 80 sowie die Positioniereinrichtung 90 sowie das Stellrad der Auslöseeinrichtung 150 und damit auch die Blockiereinrichtung 220 in der Lösestellung hält.

Nur in der Arbeitsstellung A und der Ruhestellung R kann die Rückstellkraft 310 den Lagerkopf 32 in Richtung der ersten Lagerwange 14 bewegen, um die entsprechenden Formschlußelemente 270 und 280 in Eingriff zu bringen, wobei gleichzeitig sowohl die Kopplungseinrichtung 80 und die Positioniereinrichtung 90 unter Wirkung der Kraft der Wendelfeder 132 in die Spannstellung bewegt werden, wobei die Auslöseeinrichtung 150 aufgrund der Beaufschlagung des Stellrades 156 mit der Drehfeder 160 der Positioniereinrichtung 90 in die Spannstellung folgt und die Spannstellung der Kniehebelmechanik 94 durch das Stellrad 156 zusätzlich fixiert wird.

Ferner wird durch die Wendelfeder 132 auch ein Spannen des Tellerfederpakets 106 bewirkt, welches in der Spannstellung die Druckkraft 300 erzeugt, die Teil der Spannkraft 296 ist.

Die Tatsache, daß die Spannstellung eine durch die Kurvenbahn 154 festgelegte Übertotpunktstellung der Kniehebelmechanik 94 darstellt in der die Kniehebelmechanik 94 durch die Kraft der Wendelfeder 132 und der Kraft-wirkung des Tellerfederpakets 106 beaufschlagt ist, ist wesentlich für die Verriegelungssicherheit der erfindungsgemäßen Anhängekupplung in der Spannstellung, da diese Übertotpunktstellung der Kniehebelmechanik 94 eine Stellung darstellt, die durch vom Kugelhals 40 auf den Lagerkopf 32 wirkende und über die Kopplungseinrichtung 80 übertragene Kräfte per se nicht lösbar ist.

Darüber hinaus stellt die Gegenkurve 182 des Stellrades 156 eine weitere Sicherheitsfunktion dar, da in der Spannstellung des Stellrades 156 die Gegenkurve 182 dem Bahnfolger 164 die Möglichkeit nimmt, sich in der Richtung 172 zu bewegen.

Ein dritter Sicherheitsaspekt wird gebildet durch die Blockiereinrichtung 220, welche bei der zwangsgesteuerten Rückstellung der Kniehebelmechanik 94 von der Lösestellung in die Spannstellung aufgrund des Zurückdrehens des Stellrades 156 und der entfallenden Einwirkung der Betätigungskurve 262 auf die Betätigungswippe 250 ebenfalls in die Spannstellung übergeht, wobei die Druckfeder 240 den Verschiebekeil 222 soweit verschiebt, daß der Keilabschnitt 234 wiederum zwischen der Rückseite 236 des Umlenkhebels 60 und der Gleitfläche 224 liegt und nicht nur aufgrund der Druckkraft 246 zur Spannkraft 296 beiträgt, sondern gleichzeitig eine Blockierung für jedwede Bewegung der Rückseite 236 des Umlenkhebels 60 in Richtung der ersten Lagerwange 14 darstellt.

Der Vorteil dieser Lösung ist somit darin zu sehen, daß bei Überführen der Positioniereinrichtung 90 und damit zwangsgesteuert auch der Kopplungseinrichtung 80 und des Lagerkopfes 32 in die Lösestellung die Rückstellkraft 310 bei Nachlassen des Zuges auf das Zugseil 208 so lange zur Verfügung steht, bis der Lagerkopf 32 und die Positioniereinrichtung 90 wiederum die Spannstellung erreicht haben, die zusätzlich mehrfach gesichert ist.

Dies erfolgt bei nicht mehr betätigter Positioniereinrichtung 90 selbsttätig, sobald der Kugelhals 40 entweder die Arbeitsstellung A oder die Ruhestellung R erreicht hat, jedoch nicht in den Zwischenstellungen zwischen der Arbeitsstellung A und der Ruhestellung R, so daß sichergestellt ist, daß der Kugelhals 40 lediglich in den dafür vorgesehenen Stellungen, nämlich der Arbeitsstellung A und der Ruhestellung R, sicher verriegelt wird, jedoch in keiner Zwischenstellung und somit in keinerlei scheinbar zulässige Stellungen eine Fixierung des Kugelhalses 40 möglich ist.

Bei dem ersten Ausführungsbeispiel der erfindungsgemäßen Lösung ist der Kugelhals 40 mit dem Lagerkopf 32 frei drehbar auf dem Lagerabschnitt 30 des Lagerzapfens 18 gelagert.

Erfolgt somit beispielsweise in der Arbeitsstellung A ein Ziehen am Zugseil 208, so erfolgt das Überführen des Lagerkopfes 32 in die Lösestellung und in dieser verschwenkt der Kugelhals 40 selbsttätig aufgrund seines Eigengewichtes um die Achse 20 des Lagerzapfens 18 in eine zwischen der Arbeitsstellung A und der Ruhestellung R liegende Stellung, beispielsweise eine Stellung, wie sie in Fig. 22 dargestellt ist.

In dieser Zwischenstellung verhindert nun der Führungskörper 312 mit der Stützbahn 316 jegliches Eingreifen der Formschlußelemente 270 und 280, so daß die Bedienungsperson manuell die Möglichkeit hat, den Kugelhals 40 entweder in die Arbeitsstellung A oder in die Ruhestellung R zu verschwenken, in welcher dann eine selbsttätige sichere Verriegelung aufgrund der Wirkung der Rückstellkraft 310 erfolgt, wobei in der Spannstellung wieder die Spannkraft 296 in der beschriebenen Art und Weise wirksam ist.

In gleicher Weise läßt sich auch beim Betätigen der Zugseils 208 in der Ruhestellung R der Kugelhals 40 aufgrund seines Eigengewichtes aus dieser herausschwenken und von der jeweiligen Zwischenstellung entweder in die Ruhestellung R oder in die Arbeitsstellung A bewegen, in welcher dann wieder selbsttätig die sichere Verriegelung des Lagerkopfes 32 des Kugelhalses 40 erfolgt.

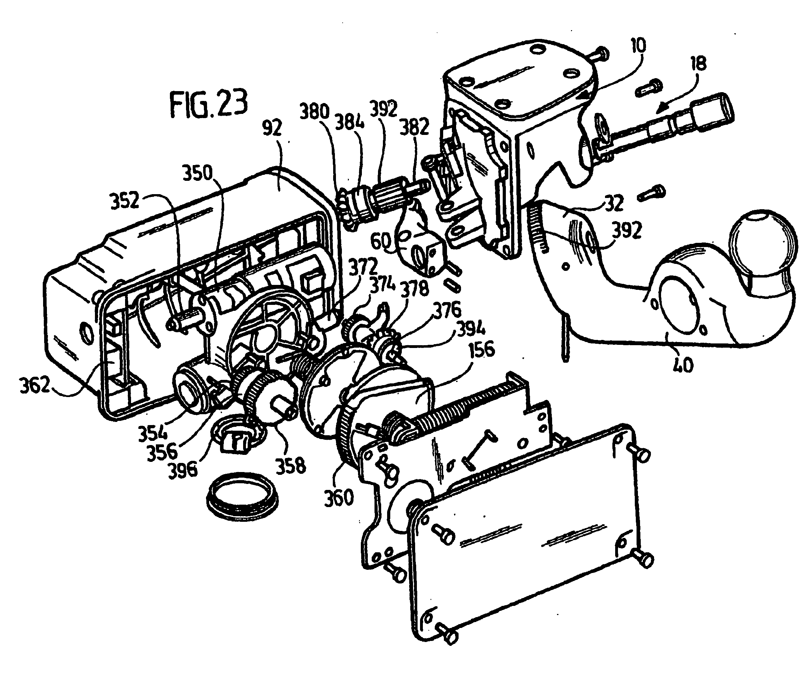

Bei einem zweiten Ausführungsbeispiel einer erfindungsgemäßen Anhängekupplung, dargestellt in den Figuren 23, 24 und 25 ist die Auslöseeinrichtung 150 durch einen elektrischen Auslöseantrieb 364 und außerdem der Kugelhals 40 durch einen elektrischen Schwenkantrieb 368 von der Arbeitsstellung A in die Ruhestellung R und umgekehrt verschwenkbar.

Es ist aber auch ebenfalls denkbar, lediglich den elektrischen Auslöseantrieb 364 für die Auslöseeinrichtung 150 vorzusehen ohne den elektrischen Schwenkantrieb 368 einzusetzen oder lediglich den elektrischen Schwenkantrieb 368 für das Verschwenken des Kugelhalses 40 von der Arbeitsstellung A in die Ruhestellung R und umgekehrt, wobei dann die übrigen Funktionen, das heißt das Verschwenken des Kugelhalses 40 bzw. das Betätigen der Auslöseeinrichtung 150 manuell durchzuführen sind.

Bei dem zweiten Ausführungsbeispiel werden sämtliche Elemente des ersten Ausführungsbeispiels verwendet, so daß hinsichtlich der Beschreibung derselben vollinhaltlich auf das erste Ausführungsbeispiel Bezug genommen wird. Diese Elemente werden jedoch ergänzt durch elektrische Antriebe.

Diese Art der Ausführung der erfindungsgemäßen Anhängekupplung stellt einen weiteren Vorteil dar, da der mechanische Aufbau identisch ist und somit unterschiedliche Ausführungsvarianten der Anhängekupplung mit mechanisch identischen Teilen und mechanisch identischer Funktion realisierbar sind.

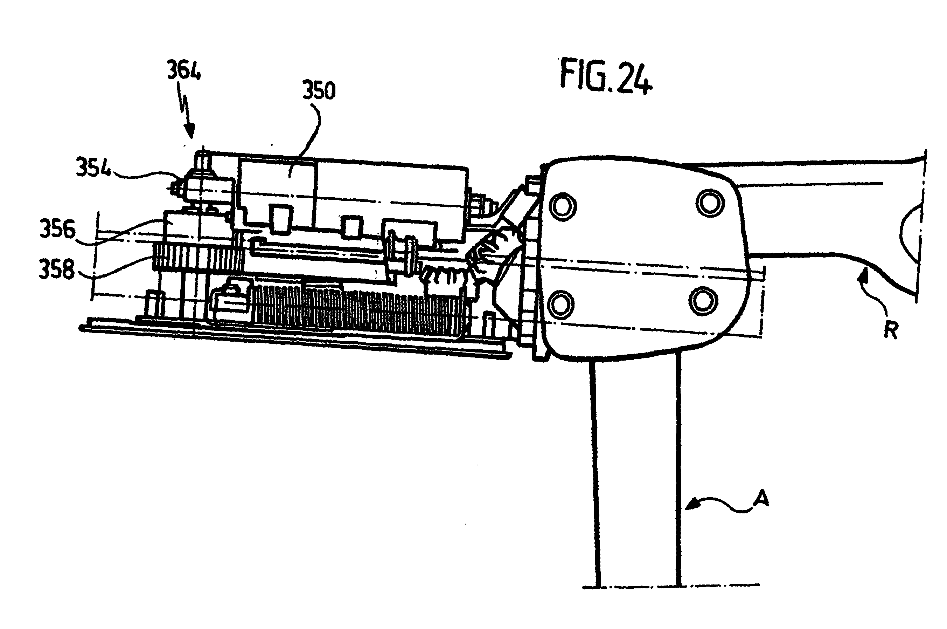

So ist, wie in Fig. 23 und Fig. 24 dargestellt für den Auslöseantrieb 364 ein Antriebsmotor 250 vorgesehen, welcher über eine Schnecke 352 und ein Schneckenrad 354 eine elektrische betätigbare Kupplung 356 antreibt, welche es erlaubt, elektrisch gesteuert das Schneckenrad 354 mit einem Antriebsritzel 358 zu koppeln oder die Kopplung zu lösen, wobei das Antriebsritzel 358 mit einer Außenverzahnung 360 des Stellrades 156 kämmt.

Zum Überführen der Positioniereinrichtung 90 sowie des über die Kopplungseinrichtung 80 zwangsgesteuert bewegbaren Lagerkopfes 32 von der Spannstellung in die Lösestellung wird der Antriebsmotor 350 eingeschaltet und gleichzeitig wird die elektrisch steuerbare Kupplung 356 bestromt, um die Wirkverbindung zwischen dem Schneckenrad 354 und dem Antriebsritzel 358 herzustellen.

Damit treibt das Antriebsritzel 358 das Stellrad 156 derart an, daß sich dieses in Richtung 168 dreht und dabei in der im Zusammenhang mit dem ersten Ausführungsbeispiel beschriebenen Art und Weise die Kniehebelmechanik 94 und somit den Lagerkopf 32 von der Spannstellung in die Lösestellung überführt.

Eine Steuerung 362, welche den Antriebsmotor 350 und die elektrisch ansteuerbare Kupplung 356 ansteuert ist so eingestellt, daß diese Steuerung 362 nach einem Zeitraum, welcher größer ist als der ausgehend von der Spannstellung üblicherweise für das Erreichen der Lösestellung benötigte Zeitraum, beispielsweise aus Sicherheitsgründen ein Mehrfaches derselben beträgt, schaltet den Antriebsmotor 350 und die elektrisch steuerbare Kupplung 356 ab.

In diesem abgeschalteten Zustand ist das Antriebsritzel 358 relativ zum Schneckenrad 354 frei drehbar, so daß die Auslöseeinrichtung 150 nicht mehr betätigt ist und die Rückstellkraft 310 in gleicher Weise wie beim ersten Ausführungsbeispiel bei nicht betätigter Auslöseeinrichtung 150 wirksam wird.

Somit geht - genau wie beim ersten Ausführungsbeispiel beschrieben - die Positioniereinrichtung 90 und somit auch der Lagerkopf 32 dann in die Spannstellung über, wenn der Kugelhals 40 und der Lagerkopf 32 entweder die Arbeitsstellung A oder die Ruhestellung R einnehmen oder noch in dieser stehen.

Ein vorteilhaftes Element einer Weiterbildung der Erfindung ist dabei eine elektrisch aktivierbare Kupplung 356, da diese die Möglichkeit eröffnet, bei jeder Art von Stromausfall die Verbindung zwischen dem Schneckenrad 354 und dem Antriebsritzel 358 zu lösen und somit das Antriebsritzel 358 frei drehbar zu halten, so daß keinerlei Betätigung der Auslöseeinrichtung 150 über den Antriebsmotor 350 mehr erfolgt.

Selbst wenn nach beginnender Drehung des Stellrades 156, und zwar zwischen der Spannstellung und der Lösestellung ein Stromausfall auftritt, so löst die elektrisch aktivierbare Kupplung 356 die Verbindung vom Antriebsritzel 358 zum Schneckenrad 354, so daß sofort nach dem Lösen der elektrisch aktivierbaren Kupplung 356 das Stellrad 156 aufgrund der Wirkung der Drehfeder 160 und auch der Wendelfeder 132 in die Spannstellung zurückkehren kann.

Vorzugsweise ist dabei die elektrisch aktivierbaren Kupplung 356 eine Schlingfederkupplung oder eine Federbandkupplung, welche lediglich einen geringen Strom benötigt um wirksam zu werden.

Insbesondere sind dabei derartige Kupplungen, die mit geringem Strom betreibbar sind, solche Kupplungen, die im gekuppelten Zustand lediglich in einer Drehrichtung wirksam sind. Dies ist bei der erfindungsgemäßen Lösung darüber hinaus von Vorteil, da damit Fehlfunktionen durch Verpolung des Antriebsmotors 350 und somit unzulässiger Richtungsumkehr ausgeschlossen werden können.

Darüber hinaus umfaßt das zweite Ausführungsbeispiel für den Schwenkantrieb 368, wie in Fig. 23 und 24 dargestellt, einen Antriebsmotor 370, welcher über eine Schnecke 372 ein Schneckenrad 374 antreibt, das auf einer im Gehäuse 92 gelagerten Antriebswelle 376 sitzt, welche ihrerseits noch ein erstes Kegelrad 378 trägt.

Mit dem ersten Kegelrad 378 ist ein zweites Kegelrad 380 antreibbar, das seinerseits, wie in Fig. 23, 24 und 25 dargestellt, auf einer Antriebswelle 382 sitzt, die über ein Lager 384 in der ersten Lagerwange 14 und mit ihrem Ende 386 in einer weiteren Bohrung 388 im Lagerteil gelagert ist.

Diese Antriebswelle 382 trägt ihrerseits ein Ritzel 390, welches in jeder axial verschobenen Stellung des Lagerkopfes 32 mit einer Außenverzahnung 392 desselben kämmt, so daß mittels des Antriebsmotors 370 der Lagerkopf 32 und somit auch der Kugelhals 40 verschwenkbar ist.

Ferner ist vorzugsweise das erste Kegelrad 378 über eine Rutschkupplung 394, beispielsweise eine Rutschnabe, mit der Antriebswelle 382 verbunden, so daß die Möglichkeit besteht, auch bei ausgefallenem Antriebsmotor 370 den Kugelhals 40 unter Überwinden des Auslösemoments der Rutschkupplung 394 zu verschwenken.

Ferner erlaubt die Rutschkupplung 394 auch den Antriebsmotor 370 für das Verschwenken des Kugelhalses 40 zu Zeiten zu bestromen, zu denen ein Schwenken des Kugelhalses 40 nicht möglich ist, weil beispielsweise die Formschlußelemente 270 und 280 noch nicht vollständig voneinander gelöst sind.

Schließlich stellt die Rutschkupplung 394 ein weiteres Sicherheitselement dar, das eine Beschädigung von Gegenständen oder von Personen verhindert, wenn diese beim Verschwenken des Kugelhalses 40 im Schwenkbereich desselben liegen und der Kugelhals 40 gegen diese läuft.

Eine besonders raumsparende Anordnung der Positionseinrichtung 90 und der Auslöseeinrichtung 150 ist dann erreichbar, wenn der Antriebsmotor 350 und der Antriebsmotor 370 ungefähr in einer Ebene liegen und ungefähr parallel zu dieser Ebene auf einer Seite derselben die Auslöseeinrichtung 150 und ungefähr parallel zu dieser die Positioniereinrichtung 90 angeordnet ist.

Vorzugsweise stehen alle diese Ebenen senkrecht, sie können jedoch auch in anderen Orientierungen verlaufen.

Vorzugsweise erfolgt durch die Steuerung 362, welche auch den Antriebsmotor 370 ansteuert, ein Betrieb der erfindungsgemäßen Anhängekupplung beispielsweise derart, daß in der Spannstellung der Positioniereinrichtung 90, die entweder in der Arbeitsstellung A oder der Ruhestellung R vorliegt, zunächst ein Bestromen des Antriebsmotors 350 und der elektrisch steuerbaren Kupplung 356, so daß das Antriebsritzel 358 das Stellrad 356 antreibt.

Entweder gleichzeitig oder mit Zeitverzögerung oder gesteuert durch einen beispielsweise die Stellungen des Stellrades 156 detektierenden Schalter erfolgt ein Starten des Antriebsmotors 370, welcher die Schwenkbewegung des Lagerkopfes 32 und somit des Kugelhalses 40 bewirkt.

Erfolgt der Start des Antriebsmotors 370 bevor die Formschlußelemente 270 und 280 außer Eingriff sind, so ist dies unproblematisch, da in diesem Fall die Rutschkupplung 394 wirksam wird.

Sobald die Lösestellung erreicht ist und Formschlußelemente 270 und 280 außer Eingriff stehen, besteht nun die Möglichkeit, den Lagerkopf 32 um den Lagerzapfen 18 zu verschwenken.

Die Steuerung 362 muß daher den Antriebsmotor 350 und die elektrisch steuerbare Kupplung 356 so lange bestromen, daß sicher ist, daß die Lösestellung der Positioniereinrichtung 90 und somit auch des Lagerkopfes 32 erreicht ist. Sobald diese erreicht ist, bewirkt der Antriebsmotor 370 ein sofortiges Verschwenken des Lagerkopfes 32, so daß dieser die Arbeitsstellung oder die Ruhestellung sofort verläßt und in eine Zwischenstellung übergeht. Sobald der Lagerkopf 32 in einer Zwischenstellung steht, kann der Antriebsmotor 350 abgeschaltet und die elektrisch steuerbare Kupplung 356 ebenfalls gelöst werden. Nunmehr liegt derselbe Zustand vor, wie wenn beim ersten Ausführungsbeispiel der Zug auf das Zugseil 208 entfällt.

Sobald das Verschwenken des Lagerkopfes 32 diesen und den Kugelhals 40 entweder in die Ruhestellung oder die Arbeitsstellung führt, bewirkt die Rückstellkraft 310, daß die Positioniereinrichtung den Lagerkopf 32 von der Lösestellung wieder in die Spannstellung bewegt.

Vorteilhaft ist bei der erfindungsgemäßen Lösung somit, daß der Lagerkopf 32 bei Erreichen der Arbeitsstellung oder der Ruhestellung selbsttätig, das heißt ohne elektrischen Antrieb, in eine sichere Stellung, nämlich die Spannstellung übergeht und somit ordnungsgemäß verriegelt wird.

Ferner hat der Lagerkopf 32 auch keinerlei Möglichkeit, in den Zwischenstellungen in irgendeine Stellung überzugehen, in welcher der Anschein einer ordnungsgemäßen Verrastung besteht.

Selbst bei Ausfall des Antriebsmotors 370 hat die Bedienungsperson noch die Möglichkeit, durch Überwinden der Rutschkupplung 394 den Kugelhals 40 entweder in die Arbeitsstellung oder in die Ruhestellung zu bewegen.

Darüber hinaus ist nach wie vor über das Zugseil 208 die Möglichkeit gegeben, auch bei Ausfall des Antriebsmotors 350 und/oder der elektrisch steuerbaren Kupplung 356 die Auslöseeinrichtung 150 zu betätigen und dadurch die Lösestellung zu erreichen, nämlich in gleicher Weise wie beim ersten Ausführungsbeispiel beschrieben, wobei dann ebenfalls unter Überwindung der Auslösekraft der Rutschkupplung 394 der Kugelhals 40 zwischen der Arbeitsstellung A und der Ruhestellung R verschwenkt werden kann.

Die erfindungsgemäße elektrisch betätigbare Kupplung gemäß dem zweiten Ausführungsbeispiel der Erfindung hat somit den großen Vorteil, daß sie selbst bei Totalausfall der Elektrik noch in gleicher Weise einsetzbar ist, wie das erste Ausführungsbeispiel, das heißt, es besteht die Möglichkeit, den Lagerkopf 32 von der Spannstellung in die Lösestellung zu überführen und zu verschwenken und dabei in der Arbeitsstellung oder der Ruhestellung jeweils wieder sicher zu verriegeln, da für die zuverlässige Funktion der Verriegelung lediglich mechanisch wirkende und mechanisch gekoppelte und zusammenwirkende Einrichtungen wirksam sind und keinerlei elektrischer Antrieb oder elektrische Funktionskopplung erforderlich ist.

Darüber hinaus ist ein Stromausfall in jeder Zwischenstellung zwischen der Spannstellung und der Lösestellung beim Betätigen der Auslöseeinrichtung 150 unerheblich, da ein Stromausfall unmittelbar zum Lösen der elektrisch steuerbaren Kupplung 356 führt und somit unmittelbar die freie Drehbarkeit des Antriebsritzels 358 und somit den unbetätigten Zustand der Auslöseeinrichtung 150 und damit auch der Positioniereinrichtung 90 herbeiführt.

Vorzugsweise ist zum Betätigen des Zugseils 208 bei dem zweiten Ausführungsbeispiel eine Zugöse 396 vorgesehen, welche am Gehäuse 92 angeordnet ist und somit eine manuelle Betätigung der Auslöseeinrichtung 150 erlaubt.

## Patentansprüche

1. Anhängekupplung für Kraftfahrzeuge, umfassend ein fahrzeugfest angeordnetes Lagerteil (10), einen gegenüber dem Lagerteil (10) zwischen einer Arbeitsstellung (A) und einer Ruhestellung (R) bewegbaren Kugelhals (40), welcher mittels eines Lagerkopfes (32) an dem Lagerteil (10) zumindest drehbar gelagert ist, eine Kugelhalsfixierung mit Formschlusselementen (270, 280), welche durch Relativbewegung von einer Fixierstellung, in welcher der Lagerkopf (32) relativ zum Lagerteil (10) formschlüssig festgelegt ist, In eine Lösestellung, In welcher der Lagerkopf (32) gegenüber dem Lagerteil (10) bewegbar ist, überführbar sind und umgekehrt, wobei lagerteitseitige Formschlusselemente (270) stationär an einer ersten Lagerwange (14) des Lagerteils (32) angeordnet sind, und eine mechanische Positioniereinrichtung (90), mit welcher die Relativbewegung der Formschlusselemente (270, 280) zum Erreichen der Fixierstellung und der Lösestellung ausführbar ist,
**dadurch gekennzeichnet, dass** lagerkopfseitige Formschlusselemente (280) stationär am Lagerkopf (32) angeordnet sind, dass der Lagerkopf (32) in einer Bewegungsrichtung (20) quer zu einer Schwenkrichtung relativ zum Lagerteil (10) bewegbar Ist, um die Formschlusselemente (270, 280) zwischen der Fixierstellung und der Lösestellung zu bewegen, dass die mechanische Positioniereinrichtung (90) In eine Fixierstellung bringbar ist, in welcher diese den Lagerkopf (32) derart positioniert, dass die Formschlusselemente (270, 280) in der Fixierstellung stehen, und in eine Lösestellung bringbar ist, in welcher diese den Lagerkopf (32) derart positioniert, dass die Formschlusselemente (270, 280) in der Lösestellung stehen, dass die mechanische Positioniereinrichtung (90) einen Kraftspeicher und eine Kraftübertragungsmechanik (94) für den Kraftspeicher (132) aufweist, die In der Fixierstellung selbsttätig eine stabile Stellung aufrechterhält, dass die Kraftübertragungsmechanik (94) als Kraftübersetzungsmechanik ausgebildet ist, die zumindest in einem Teil der möglichen Stellungen eine Kraftverstärkung bewirkt, dass die Positioniereinrichtung (90) eine Spannstellung als Fixierstellung aufweist, in welcher die Positioniereinrichtung (90) eine Kraft (300) erzeugt, die zu einer auf den Lagerkopf (32) wirkenden Spannkraft (296) beiträgt, und dass bei Beaufschlagung des Lagerkopfes (32) mit der Spannkraft (296) in Richtung der ersten Lagerwange (14) aneinander anliegende, schräg zu der Bewegungsrichtung (20) des Lagerkopfes (32) verlaufende Flächen (274, 284) aufweisende konische Formschlussabschnitte (274, 284) der mindestens ein in Eingriff stehendes Formschlusselementenpaar bildenden Formschlusselemente (270, 280) eine spielfreie Fixierung des Lagerkopfes (32) relativ zum Lagerteil (10) bewirken.

2. Anhängekupplung nach Anspruch 1, **dadurch gekennzeichnet, dass** die Kraftübersetzungsmechanik (94) in der Fixierstellung gegen eine Bewegung in Richtung der Lösestellung eine Selbstsperrung aufweist.

3. Anhängekupplung nach Anspruch 1 oder 2, **dadurch gekennzeichnet, dass** die Kraftübersetzungsmechanik (94) eine Hebelmechanik ist.

4. Anhängekupplung nach einem der voranstehenden Ansprüche, **dadurch gekennzeichnet, dass** der Kraftspeicher (132) ein mechanischer Kraftspeicher ist.

5. Anhängekupplung nach Anspruch 4, **dadurch gekennzeichnet, dass** der Kraftspeicher (132) ein Federkraftspeicher ist.

6. Anhängekupplung nach einem der voranstehenden Ansprüche, **dadurch gekennzeichnet, dass** der Kraftspeicher (132) in der Fixierstellung in einem ersten gespannten Zustand ist und In der Lösestellung in einem zweiten gespannten Zustand.

7. Anhängekupplung nach einem der voranstehenden Ansprüche, **dadurch gekennzeichnet, dass** die Kraftübersetzungsmechanik (94) im unbetätigten Zustand der Positioniereinrichtung (90) durch die Wirkung des Kraftspeichers (132) selbsttätig in die stabile Stellung übergeht.

8. Anhängekupplung nach einem der voranstehenden Ansprüche, **dadurch gekennzeichnet, dass** die Kraftübersetzungsmechanik die in der jeweiligen Stellung von dem Kraftspeicher (132) erzeugte Kraft in der Lösestellung geringer verstärkt als in der Fixierstellung.

9. Anhängekupplung nach einem der voranstehenden Ansprüche, **dadurch gekennzeichnet, dass** die Kraftübersetzungsmechanik (94) in ihren nahe der Fixierstellung liegenden Stellungen die größte Verstärkung für die Kraft des Kraftspeichers (132) aufweist.

10. Anhängekupplung nach einem der voranstehenden Ansprüche, **dadurch gekennzeichnet, dass** die Kraftübertragungsmechanik (94) eine Kniehebelmechanik ist.

11. Anhängekupplung nach Anspruch 10, **dadurch gekennzeichnet, dass** die Kniehebelmechanik (94) so ausgebildet ist, dass sie in der Fixierstellung nahe ihrer Totpunktstellung (174) steht.

12. Anhängekupplung nach einem der voranstehenden Ansprüche, **dadurch gekennzeichnet, dass** die Positioniereinrichtung (90) einen Spannkraftspeicher (106) umfasst.

13. Anhängekupplung nach Anspruch 12, **dadurch gekennzeichnet, dass** der Spannkraftspeicher (106) ein mechanischer Spannkraftspeicher, insbesondere ein Federkraftspeicher ist.

14. Anhängekupplung nach Anspruch 12 oder 13, **dadurch gekennzeichnet, dass** der Spannkraftspeicher (106) beim Übergang der Positlontereinrichtung (90) in die Spannstellung aktivierbar ist.

15. Anhängekupplung nach Anspruch 14, **dadurch gekennzeichnet, dass** der Spannkraftspeicher (106) zwischen der Spannstellung und einer Sperrstellung der Positioniereinrichtung (90) aktiv ist.

16. Anhängekupplung nach einem der Ansprüche 14 oder 15, **dadurch gekennzeichnet, dass** der Spannkraftspeicher (106) zwischen der Sperrstellung und der Lösestellung der Positioniereinrichtung (90) inaktiv ist.

17. Anhängekupplung nach einem der Ansprüche 14 bis 16, **dadurch gekennzeichnet, dass** der Spannkraftspeicher (106) durch den Übergang der Positioniereinrichtung (90) von der Sperrstellung in die Spannstellung aktivierbar ist.

18. Anhängekupplung nach einem der Ansprüche 14 bis 17, **dadurch gekennzeichnet, dass** der Spann kraftspeicher (106) durch den Kraftspeicher (132) aktivierbar ist.

19. Anhängekupplung nach einem der Ansprüche 12 bis 18, **dadurch gekennzeichnet, dass** der Spannkraftspeicher (106) in die Mechanik (94) der Positioniereinrichtung (90) integriert ist.

20. Anhängekupplung nach einem der voranstehenden Ansprüche, **dadurch gekennzeichnet, dass** die Positioniereinrichtung (90) durch eine Auslöseeinrichtung (150) betätigbar ist.

21. Anhängekupplung nach Anspruch 20, **dadurch gekennzeichnet, dass** mit der Auslöseeinrichtung (150) die Mechanik (94) der Positioniereinrichtung (90) gegen die Wirkung des Kraftspeichers (132) in die Lösestellung bewegbar ist.

22. Anhängekupplung nach Anspruch 20 oder 21, **dadurch gekennzeichnet, dass** die Auslöseeinrichtung (150) mit einem Kraftverstärkungsgetriebe (154, 164) auf die Positioniereinrichtung (90) einwirkt.

23. Anhängekupplung nach einem der Ansprüche 20 bis 22, **dadurch gekennzeichnet, dass** die Auslöseeinrichtung (150) mit einem Kurvengetriebe (154, 164) auf die Positioniereinrichtung (90) einwirkt.

24. Anhängekupplung nach einem der Ansprüche 20 bis 23, **dadurch gekennzeichnet, dass** mit der Auslöseeinrichtung (150) die Selbstsperrung der Positioniereinrichtung (90) aufhebbar ist.

25. Anhängekupplung nach einem der Ansprüche 20 bis 24, **dadurch gekennzeichnet, dass** mit der Auslöseeinrichtung (150) die Positioniereinrichtung (90) in der Fixierstellung sicherbar ist.

26. Anhängekupplung nach einem der Ansprüche 20 bis 25, **dadurch gekennzeichnet, dass** die Auslöseeinrichtung (150) manuell betätigbar ist.

27. Anhängekupplung nach Anspruch 26, **dadurch gekennzeichnet, dass** die Auslöseeinrichtung (150) über ein auf ein Stellelement (156) wirkendes Freigangelement (190) manuell betätigbar ist.

28. Anhängekupplung nach einem der Ansprüche 20 bis 27, **dadurch gekennzeichnet, dass** die Auslöseeinrichtung (150) über einen elektrischen Auslöseantrieb (364) betätigbar ist.

29. Anhängekupplung nach Anspruch 28, **dadurch gekennzeichnet, dass** der elektrische Auslöseantrieb (364) einen Antriebsmotor (350) und eine elektrisch steuerbare Kupplung (356) umfasst.

30. Anhängekupplung nach Anspruch 29, **dadurch gekennzeichnet, dass** die elektrisch steuerbare Kupplung (356) als im unbestromten Zustand gelöste Kupplung ausgebildet ist.

31. Anhängekupplung nach Anspruch 29 oder 30, **dadurch gekennzeichnet, dass** der elektrische Auslöseantrieb (364) eine Auslösesteuerung (362) aufweist, welche nach einem Startsignal die elektrisch steuerbare Kupplung (356) während einer festgelegten Auslösezeitdauer schließt und anschließend löst.

32. Anhängekupplung nach Anspruch 1 oder nach einem der voranstehenden Ansprüche, **dadurch gekennzeichnet, dass** die Positioniereinrichtung (90) über eine Kopplungseinrichtung (80) auf den Lagerkopf (32) einwirkt.

33. Anhängekupplung nach Anspruch 32, **dadurch gekennzeichnet, dass** die Kopplungseinrichtung (80) einen bewegbaren Lagerzapfen (18) umfasst, auf welchem der Lagerkopf (32) drehbar gelagert ist und über welchen der Lagerkopf (32) von der Fixierstellung in die Lösestellung und umgekehrt bewegbar ist.

34. Anhängekupplung nach Anspruch 33, **dadurch gekennzeichnet, dass** der Lagerkopf (32) mittels des bewegbaren Lagerzapfens (18) in Richtung einer ersten Lagerwange (14) des Lagerteils (10) bewegbar ist, weiche lagerteilseitige Formschlusselemente (270) trägt.

35. Anhängekupplung nach Anspruch 34, **dadurch gekennzeichnet, dass** der Lagerzapfen (18) in der ersten Lagerwange (14) und einer zweiten im Abstand von dieser angeordneten Lagerwange (16) des Lagerteils (10) gelagert ist und das zwischen den Lagerwangen (14, 16) der Lagerkopf (32) des Kugelhalses (40) angeordnet ist.

36. Anhängekupplung nach einem der Ansprüche 33 bis 35, **dadurch gekennzeichnet, dass** eine Einwirkung auf den Lagerzapfen (18) von einer dem Lagerkopf (32) abgewandten Seite einer Lagerwange (14) erfolgt.

37. Anhängekupplung nach einem der Ansprüche 33 bis 36, **dadurch gekennzeichnet, dass** die Kopplungseinrichtung (80) einen Umlenkhebel (60) umfasst, welcher mit dem Lagerzapfen (18) gekoppelt ist.

38. Anhängekupplung nach Anspruch 37, **dadurch gekennzeichnet, dass** der Umlenkhebel (60) auf einer dem Lagerkopf (32) gegenüberliegenden Seite einer der Lagerwangen (14) angeordnet ist.

39. Anhängekupplung nach Anspruch 1 oder nach einem der voranstehenden Ansprüche, **dadurch gekennzeichnet, dass** der Lagerkopf (32) durch eine Blockiereinrichtung (220) gegen eine Bewegung von der Fixierstellung in Richtung der Lösestellung blockierbar ist.

40. Anhängekupplung nach Anspruch 39, **dadurch gekennzeichnet, dass** sich die Blocklerelnrichtung (220) an dem Lagerteil (10) abstützt.

41. Anhängekupplung nach Anspruch 40, **dadurch gekennzeichnet, dass** die Blockiereinrichtung (220) sich an der Lagerwange (14) des Lagerteils (10) abstützt, welche die lagertellseitigen Formschlusselemente (270) trägt.

42. Anhängekupplung nach einem der Ansprüche 39 bis 41, **dadurch gekennzeichnet, dass** die Blockiereinrichtung (220) durch die Auslöseeinrichtung (150) betätigbar ist.

43. Anhängekupplung nach Anspruch 42, **dadurch gekennzeichnet, dass** die Blockiereinrichtung (220) mit der Auslöseeinrichtung (150) in definierter Synchronisation zur Positioniereinrichtung (90) betätigbar ist.

44. Anhängekupplung nach Anspruch 42 oder 43, **dadurch gekennzeichnet, dass** die Auslöseeinrichtung (150) beim Übergang von der Fixierstellung in die Lösestellung die Wirkung der Blocklerelnrichtung (220) aufhebt bevor die Positioniereinrichtung (90) beginnt, die Formschlusselemente (270, 280) außer Eingriff zu bringen.

45. Anhängekupplung nach einem der Ansprüche 43 bis 44, **dadurch gekennzeichnet, dass** die Auslöseeinrichtung (150) beim Übergang von der Lösestellung in die Fixterstellung zuerst die Positioniereinrichtung (90) veranlasst, die Formschlusselemente (270, 280) in Eingriff zu bringen und dann die Blockiereinrichtung (220) wirksam werden lässt.

46. Anhängekupplung nach einem der Ansprüche 39 bis 45, **dadurch gekennzeichnet, dass** die Blockiereinrichtung (220) selbstnachstellend ausgebildet ist.

47. Anhängekupplung nach einem der Ansprüche 39 bis 46, **dadurch gekennzeichnet, dass** die Blockiereinrichtung (220) in ihrer wirksamen Stellung mit einer zur Spannkraft (296) beitragenden Kraft auf den Lagerkopf (32) wirkt.

48. Anhängekupplung nach einem der Ansprüche 39 bis 47, **dadurch gekennzeichnet, dass** die Blockiereinrichtung (220) auf die Kopplungseinrichtung (80) wirkt.

49. Anhängekupplung nach einem der Ansprüche 39 bis 48, **dadurch gekennzeichnet, dass** die Blockiereinrichtung (220) auf einer dem Lagerkopf (32) abgewandten Seite einer Lagerwange (14) des Lagerteils angeordnet ist.

50. Anhängekupplung nach Anspruch 48 oder 49, **dadurch gekennzeichnet, dass** die Blockiereinrichtung (220) einen Blockierkörper (222) aufweist, weicher mit der Kopplungseinrichtung (80) und dem Lagerteil (10) zusammenwirkt.

51. Anhängekupplung nach Anspruch 49 oder 50, **dadurch gekennzeichnet, dass** sich der Blocklerkörper (222) an der Lagerwange (14) des Lagerteils (10) auf einer den lagerteilseitigen Formschlusselementen (270) abgewandten Seite (224) abstützt.

52. Anhängekupplung nach einem der Ansprüche 39 bis 51, **dadurch gekennzeichnet, dass** die Blockiereinrichtung (220) und die Positioniereinrichtung (90) auf derselben Seite des Lagerteils (10) angeordnet sind.

53. Anhängekupplung nach einem der Ansprüche 39 bis 51, **dadurch gekennzeichnet, dass** die Blockiereinrichtung (220) und die Auslöseeinrichtung (150) auf derselben Seite des Lagerteils (10) angeordnet sind.

54. Anhängekupplung nach Anspruch 1 oder nach einem der voranstehenden Ansprüche, **dadurch gekennzeichnet, dass** der Lagerkopf (32) eine im am Fahrzeug montierten Zustands schräg zur Horizontalen verlaufende Lagerbohrung (50) aufweist und dass die Formschiusselemente (280) auf der Seite (290) des Lagerkopfes (32) angeordnet sind, auf welcher die Lagerbohrung (50) fahrbahnnäher verläuft als auf der anderen.

55. Anhängekupplung nach Anspruch 1 oder nach einem der voranstehenden Ansprüche, **dadurch gekennzeichnet, dass** der Lagerbolzen (18) schräg zur Horizontalen verläuft und dass die Formschlusselemente (270) auf der Seite des Lagerteils (10) angeordnet Ist, welche den fahrbahnnächstliegenden Endbereich (22) des Lagerzapfens (18) aufnimmt.

56. Anhängekupplung nach Anspruch 1 oder nach einem der voranstehenden Ansprüche, **dadurch gekennzeichnet, dass** in der Arbeitsstellung (A) ein Teil (270A, 270B, 270C, 280AA, 280BA, 280CA) der in Fixierstellung stehenden Formschlusselemente (270, 280) in Eingriff ist.

57. Anhängekupplung nach Anspruch 1 oder nach einem der voranstehenden Ansprüche, **dadurch gekennzeichnet, dass** in der Ruhestellung (R) ein Teil (270A, 270B, 270C, 280AR, 280BR, 280CR) der in Fixierstellung stehenden Formschlusselemente (270, 280) in Eingriff ist.

58. Anhängekupplung nach Anspruch 56 oder 57, **dadurch gekennzeichnet, dass** am Lagerteil (10) oder am Lagerkopf (32) mindestens ein erstes Formschlusselement (280AA, 280BA, 280CA) angeordnet ist, welches nur in der Arbeitsstellung (A) mit einem Formschlusselement (270) am jeweils anderen Teil (32, 10) in Eingriff steht und mindestens ein zweites Formschlusselement (280AR; 280BR, 280CR) angeordnet ist, welcher nur in der Ruhestellung (R) mit einem Formschlusselement (270) am jeweils anderen Teil (32, 10) in Eingriff steht.

59. Anhängekupplung nach einem der voranstehenden Ansprüche, **dadurch gekennzeichnet, dass** in der Arbeitsstellung (A) das mindestens eine in Eingriff stehende Formschlusselementenpaar in der Spannstellung mit einer Spannkraft (296) in Bewegungsrichtung (20) des Lagerkopfs (32) beaufschlagt ist, um den Lagerkopf (32) am Lagerteil (10) spielfrei zu fixieren.

60. Anhängekupplung nach einem der voranstehenden Ansprüche, **dadurch gekennzeichnet, dass** in der Arbeitsstellung (A) mindestens zwei Formschlusselementenpaare (270, 280) in die Spannstellung bringbar und mit der Spannkraft (296) beaufschlagbar sind.

61. Anhängekupplung nach Anspruch 60, **dadurch gekennzeichnet, dass** in der Arbeitsstellung (A) mindestens drei Formschlusselementenpaare (270, 280) in die Spannstellung bringbar und mit der Spannkraft (296) beaufschlagbar sind.

62. Anhängekupplung nach einem der voranstehenden Ansprüche, **dadurch gekennzeichnet, dass** der Lagerkopf (32) in der Arbeitsstellung (A) und in der Spannstellung der Formschlusselementenpaare (270, 280) im wesentlichen über die Formschlusselementenpaare (270, 280) am Lagerteil (10) abgestützt ist.

63. Anhängekupplung nach einem der voranstehenden Ansprüche, **dadurch gekennzeichnet, dass** die Position des Lagerkopfes (32) In der Arbeitsstellung (A) und in der Spannstellung der Formschlusselementenpaare (270, 280) im wesentlichen über die Formschlusselementenpaare (270, 280) relativ zum Lagerteil (10) festgelegt ist.

64. Anhängekupplung nach Anspruch 1 oder nach einem der voranstehenden Ansprüche, **dadurch gekennzeichnet, dass** die Kugelhalsfixierung so ausgebildet ist, dass die Formschlusselemente (270, 280) nur in der Arbeitsstellung (A) und der Ruhestellung (R) in formschlüssig in Eingriff bringbar sind.

65. Anhängekupplung nach Anspruch 64, **dadurch gekennzeichnet, dass** die Kugelhalsfixierung Führungselemente (312, 316) umfasst, welche In Zwischenstellungen zwischen der Arbeitsstellung (A) und der Ruhestellung (R) ein Eingreifen der Formschlusselemente (270, 280) verhindern.

66. Anhängekupplung nach Anspruch 1 oder nach einem der voranstehenden Ansprüche, **dadurch gekennzeichnet, dass** der Lagerkopf (32) frei drehbar auf dem Lagerzapfen (18) angeordnet ist.

67. Anhängekupplung nach Anspruch 66, **dadurch gekennzeichnet, dass** der Kugelhals (40) manuell relativ zum Lagerteil (10) verschwenkbar ist.

68. Anhängekupplung nach Anspruch 1 oder nach einem der voranstehenden Ansprüche, **dadurch gekennzeichnet, dass** ein elektrisch steuerbarer Schwenkantrieb (368) für den Kugelhals (40) vorgesehen Ist.

69. Anhängekupplung nach Anspruch 68, **dadurch gekennzeichnet, dass** der Schwenkantrieb (368) einen elektrischen Antriebsmotor (370) aufweist.

70. Anhängekupplung nach Anspruch 68 oder 69, **dadurch gekennzeichnet, dass** der Schwenkantrieb (368) eine lösbare Kupplung (394) umfasst, die bei Ausfall des Schwenkantriebs (368) ein manuelles Verschwenken des Kugelhalses (40) zulässt.

71. Anhängekupplung nach Anspruch 70, **dadurch gekennzeichnet, dass** die lösbare Kupplung eine Rutschkupplung (394) ist.

## Claims

1. Trailer coupling for motor vehicles, comprising a bearing part (10) arranged so as to be fixed on the vehicle, a ball neck (40) movable in relation to the bearing part (10) between an operative position (A) and a rest position (R), said ball neck being mounted on the bearing part (10) by means of a bearing head (32) so as to be at least rotatable, a ball neck fixing means with form locking elements (270, 280) transferable due to relative movement from a fixing position, the bearing head (32) being secured in a form-locking manner relative to the bearing part (10) in said position, into a release position, the bearing head (32) being movable in relation to the bearing part (10) in said position, and vice versa, wherein form locking elements (270) associated with the bearing part are arranged stationarily on a first bearing frame (14) of the bearing part (32), and a mechanical positioning device (90) for bringing about the relative movement of the form locking elements (270, 280) in order to reach the fixing position and the release position,
**characterized in that** form locking elements (280) associated with the bearing head are arranged stationarily on the bearing head (32), that the bearing head (32) is movable relative to the bearing part (10) in a direction of movement (20) transverse to a pivoting direction in order to move the form locking elements (270, 280) between the fixing position and the release position, that the mechanical positioning device (90) is adapted to be brought into a fixing position, said positioning device (90) positioning the bearing head (32) in said fixing position in such a manner that the form locking elements (270, 280) are in the fixing position, and is adapted to be brought into a release position, said positioning device (90) positioning the bearing head (32) in said release position in such a manner that the form locking elements (270, 280) are in the release position, that the mechanical positioning device (90) has a force storing means and a force transfer mechanism (94) for the force storing means (132) automatically maintaining a stable position in the fixing position, that the force transfer mechanism (94) is designed as a force transmission mechanism effecting a force amplification at least in some of the possible positions, that the positioning device (90) has a tensioning position as fixing position, the positioning device (90) generating a force (300) contributing to a tensioning force (296) acting on the bearing head (32) in said tensioning position, and that when the bearing head (32) is acted upon with the tensioning force (296) in the direction of the first bearing frame (14) conical form locking sections (274, 284) of the form locking elements (270, 280) forming at least one pair of form locking elements engaging with one another bring about a clearance-free fixing of the bearing head (32) relative to the bearing part (10), said form locking sections having surfaces (274, 284) abutting on one another and extending at an angle to the direction of movement (20) of the bearing head (32).

2. Trailer coupling as defined in claim 1, **characterized in that** the force transmission mechanism (94) is self-locking in the fixing position against any movement in the direction of the release position.

3. Trailer coupling as defined in claim 1 or 2, **characterized in that** the force transmission mechanism (94) is a lever mechanism.

4. Trailer coupling as defined in any one of the preceding claims, **characterized in that** the force storing means (132) is a mechanical force storing means.

5. Trailer coupling as defined in claim 4, **characterized in that** the force storing means (132) is a spring force storing means.

6. Trailer coupling as defined in any one of the preceding claims, **characterized in that** the force storing means (132) is in a first tensioned state in the fixing position and in a second tensioned state in the release position.

7. Trailer coupling as defined in any one of the preceding claims, **characterized in that** in the non-activated state of the positioning device (90) the force transmission mechanism (94) transfers automatically into the stable position due to the action of the force storing means (132).

8. Trailer coupling as defined in any one of the preceding claims, **characterized in that** the force transmission mechanism amplifies the force generated in the respective position by the force storing means (132) to a lesser extent in the release position than in the fixing position.

9. Trailer coupling as defined in any one of the preceding claims, **characterized in that** the force transmission mechanism (94) has the greatest amplification for the force of the force storing means (132) in its positions located close to the fixing position.

10. Trailer coupling as defined in any one of the preceding claims, **characterized in that** the force transfer mechanism (94) is an elbow lever mechanism.

11. Trailer coupling as defined in claim 10, **characterized in that** the elbow lever mechanism (94) is designed such that it is close to its dead-centre position (174) in the fixing position.

12. Trailer coupling as defined in any one of the preceding claims, **characterized in that** the positioning device (90) comprises a tensioning force storing means (106).

13. Trailer coupling as defined in claim 12, **characterized in that** the tensioning force storing means (106) is a mechanical tensioning force storing means, in particular, a spring force storing means.

14. Trailer coupling as defined in claim 12 or 13, **characterized in that** the tensioning force storing means (106) is adapted to be activated during the transfer of the positioning means (90) into the tensioning position.

15. Trailer coupling as defined in claim 14, **characterized in that** the tensioning force storing means (106) is active between the tensioning position and a blocking position of the positioning device (90).

16. Trailer coupling as defined in one of claims 14 or 15, **characterized in that** the tensioning force storing means (106) is inactive between the blocking position and the release position of the positioning device (90).

17. Trailer coupling as defined in any one of claims 14 to 16, **characterized in that** the tensioning force storing means (106) is adapted to be activated by the transfer of the positioning device (90) from the blocking position into the tensioning position.

18. Trailer coupling as defined in any one of claims 14 to 17, **characterized in that** the tensioning force storing means (106) is adapted to be activated by the force storing means (132).

19. Trailer coupling as defined in any one of claims 12 to 18, **characterized in that** the tensioning force storing means (106) is integrated into the mechanism (94) of the positioning device (90).

20. Trailer coupling as defined in any one of the preceding claims, **characterized in that** the positioning device (90) is adapted to be actuated by a triggering device (150).

21. Trailer coupling as defined in claim 20, **characterized in that** with the triggering device (150) the mechanism (94) of the positioning device (90) is movable into the release position contrary to the action of the force storing means (132).

22. Trailer coupling as defined in claim 20 or 21, **characterized in that** the triggering device (150) acts on the positioning device (90) with a force amplifying gear (154, 164).

23. Trailer coupling as defined in any one of claims 20 to 22, **characterized in that** the triggering device (150) acts on the positioning device (90) with a cam gear (154, 164).

24. Trailer coupling as defined in any one of claims 20 to 23, **characterized in that** the self locking of the positioning device (90) is adapted to be terminated with the triggering device (150).

25. Trailer coupling as defined in any one of claims 20 to 24, **characterized in that** the positioning device (90) is adapted to be secured in the fixing position with the triggering device (150).

26. Trailer coupling as defined in any one of claims 20 to 25, **characterized in that** the triggering device (150) is adapted to be actuated manually.

27. Trailer coupling as defined in claim 26, **characterized in that** the triggering device (150) is adapted to be actuated manually via a free-moving element (190) acting on an adjusting element (156).

28. Trailer coupling as defined in any one of claims 20 to 27, **characterized in that** the triggering device (150) is adapted to be actuated via an electric triggering drive (364).

29. Trailer coupling as defined in claim 28, **characterized in that** the electric triggering drive (364) comprises a drive motor (350) and an electrically controllable coupling (356).

30. Trailer coupling as defined in claim 29, **characterized in that** the electrically controllable coupling (356) is designed as a coupling released in the state without current.

31. Trailer coupling as defined in claim 29 or 30, **characterized in that** the electric triggering drive (364) has a triggering control (362) closing the electrically controllable coupling (356) during a predetermined triggering period following a starting signal and subsequently releasing it.

32. Trailer coupling as defined in claim 1 or as defined in any one of the preceding claims, **characterized in that** the positioning device (90) acts on the bearing head (32) via a coupling device (80).

33. Trailer coupling as defined in claim 32, **characterized in that** the coupling device (80) comprises a movable bearing pin (18), the bearing head (32) being rotatably mounted on said pin and the bearing head (32) being movable via said pin from the fixing position into the release position and vice versa.

34. Trailer coupling as defined in claim 33, **characterized in that** the bearing head (32) is movable by means of the movable bearing pin (18) in the direction of a first bearing frame (14) of the bearing part (10), said frame bearing form locking elements (270) associated with the bearing part.

35. Trailer coupling as defined in claim 34, **characterized in that** the bearing pin (18) is mounted in the first bearing frame (14) and a second bearing frame (16) of the bearing part (10) arranged at a distance from said first bearing frame and that the bearing head (32) of the bearing neck (40) is arranged between the bearing frames (14, 16).

36. Trailer coupling as defined in any one of claims 33 to 35, **characterized in that** the bearing pin (18) is acted upon from a side of a bearing frame (14) facing away from the bearing head (32).

37. Trailer coupling as defined in any one of claims 33 to 36, **characterized in that** the coupling device (80) comprises a reversing lever (60) coupled to the bearing pin (18).

38. Trailer coupling as defined in claim 37, **characterized in that** the reversing lever (60) is arranged on a side of one of the bearing frames (14) located opposite the bearing head (32).

39. Trailer coupling as defined in claim 1 or as defined in any one of the preceding claims, **characterized in that** the bearing head (32) is adapted to be blocked by a blocking device (220) against any movement from the fixing position in the direction of the release position.

40. Trailer coupling as defined in claim 39, **characterized in that** the blocking device (220) is supported on the bearing part (10).

41. Trailer coupling as defined in claim 40, **characterized in that** the blocking device (220) is supported on the bearing frame (14) of the bearing part (10), said frame bearing the form locking elements (270) associated with the bearing part.

42. Trailer coupling as defined in any one of claims 39 to 41, **characterized in that** the blocking means (220) is adapted to be actuated by the triggering device (150).

43. Trailer coupling as defined in claim 42, **characterized in that** the blocking device (220) is adapted to be actuated with the triggering device (150) in a defined synchronization in relation to the positioning device (90).

44. Trailer coupling as defined in claim 42 or 43, **characterized in that** the triggering device (150) terminates the effect of the blocking device (220) during the transfer from the fixing position into the release position before the positioning device (90) begins to bring the form locking elements (270, 280) out of engagement.

45. Trailer coupling as defined in one of claims 43 to 44, **characterized in that** during the transfer from the release position into the fixing position the triggering device (150) first causes the positioning device (90) to bring the form locking elements (270, 280) into engagement and then causes the blocking device (220) to become active.

46. Trailer coupling as defined in any one of claims 39 to 45, **characterized in that** the blocking device (220) is designed to be self-readjusting.

47. Trailer coupling as defined in any one of claims 39 to 46, **characterized in that** the blocking device (220) acts on the bearing head (32) in its active position with a force contributing to the tensioning force (296).

48. Trailer coupling as defined in any one of claims 39 to 47, **characterized in that** the blocking device (220) acts on the coupling device (80).

49. Trailer coupling as defined in any one of claims 39 to 48, **characterized in that** the blocking device (220) is arranged on a side of a bearing frame (14) of the bearing part facing away from the bearing head (32).

50. Trailer coupling as defined in claim 48 or 49, **characterized in that** the blocking device (220) has a blocking member (222) interacting with the coupling device (80) and the bearing part (10).

51. Trailer coupling as defined in claim 49 or 50, **characterized in that** the blocking member (222) is supported on the bearing frame (14) of the bearing part (10) on a side (224) facing away from the form locking elements (270) associated with the bearing part.

52. Trailer coupling as defined in any one of claims 39 to 51, **characterized in that** the blocking device (220) and the positioning device (90) are arranged on the same side of the bearing part (10).

53. Trailer coupling as defined in any one of claims 39 to 51, **characterized in that** the blocking device (220) and the triggering device (150) are arranged on the same side of the bearing part (10).

54. Trailer coupling as defined in claim 1 or as defined in any one of the preceding claims, **characterized in that** the bearing head (32) has a bearing bore (50) extending at an angle to the horizontal in the state mounted on the vehicle and that the form locking elements (280) are arranged on the side (290) of the bearing head (32) where the bearing bore (50) extends closer to the roadway than on the other side.

55. Trailer coupling as defined in claim 1 or as defined in any one of the preceding claims, **characterized in that** the bearing bolt (18) extends at an angle to the horizontal and that the form locking elements (270) are arranged on the side of the bearing part (10) accommodating the end area (22) of the bearing pin (18) located closest to the roadway.

56. Trailer coupling as defined in claim 1 or as defined in any one of the preceding claims, **characterized in that** some (270A, 270B, 270C, 280AA, 280BA, 280CA) of the form locking elements (270, 280) located in fixing position are in engagement in the operative position (A).

57. Trailer coupling as defined in claim 1 or as defined in any one of the preceding claims, **characterized in that** some (270A, 270B, 270C, 280AR, 280BR, 280CR) of the form locking elements (270, 280) located in fixing position are in engagement in the rest position (R).

58. Trailer coupling as defined in claim 56 or 57, **characterized in that** at least one first form locking element (280AA, 280BA, 280CA) is arranged on the bearing part (10) or on the bearing head (32), said element being in engagement with a form locking element (270) on the respectively other part (32, 10) only in the operative position (A), and at least one second form locking element (280AR; 280BR, 280CR) is arranged on the bearing part (10) or on the bearing head (32), said element being in engagement with a form locking element (270) on the respectively other part (32, 10) only in the rest position (R).

59. Trailer coupling as defined in any one of the preceding claims, **characterized in that** in the operative position (A) the at least one pair of engaging form locking elements is acted upon in the tensioning position with a tensioning force (296) in the direction of movement (20) of the bearing head (32) in order to fix the bearing head (32) on the bearing part (10) free from play.

60. Trailer coupling as defined in any one of the preceding claims, **characterized in that** in the operative position (A) at least two pairs of form locking elements (270, 280) are adapted to be brought into the tensioning position and acted upon with the tensioning force (296).

61. Trailer coupling as defined in claim 60, **characterized in that** in the operative position (A) at least three pairs of form locking elements (270, 280) are adapted to be brought into the tensioning position and acted upon with the tensioning force (296).

62. Trailer coupling as defined in any one of the preceding claims, **characterized in that** the bearing head (32) is supported on the bearing part (10) essentially via the pairs of form locking elements (270, 280) in the operative position (A) and in the tensioning position of the pairs of form locking elements (270, 280).

63. Trailer coupling as defined in any one of the preceding claims, **characterized in that** the position of the bearing head (32) is determined relative to the bearing part (10) essentially via the pairs of form locking elements (270, 280) in the operative position (A) and in the tensioning position of the pairs of form locking elements (270, 280).

64. Trailer coupling as defined in claim 1 or as defined in any one of the preceding claims, **characterized in that** the ball neck fixing means is designed such that the form locking elements (270, 280) are adapted to be brought into engagement in a form-locking manner only in the operative position (A) and the rest position (R).

65. Trailer coupling as defined in claim 64, **characterized in that** the ball neck fixing means comprises guide elements (312, 316) preventing any engagement of the form locking elements (270, 280) in intermediate positions between the operative position (A) and the rest position (R).

66. Trailer coupling as defined in claim 1 or as defined in any one of the preceding claims, **characterized in that** the bearing head (32) is arranged on the bearing pin (18) so as to be freely rotatable.

67. Trailer coupling as defined in claim 66, **characterized in that** the ball neck (40) is adapted to be pivoted manually relative to the bearing part (10).

68. Trailer coupling as defined in claim 1 or as defined in any one of the preceding claims, **characterized in that** an electrically controllable pivot drive (368) is provided for the ball neck (40).

69. Trailer coupling as defined in claim 68, **characterized in that** the pivot drive (368) has an electric drive motor (370).

70. Trailer coupling as defined in claim 68 or 69, **characterized in that** the pivot drive (368) comprises a releasable coupling (394) allowing a manual pivoting of the ball neck (40) upon failure of the pivot drive (368).

71. Trailer coupling as defined in claim 70, **characterized in that** the releasable coupling is a slip coupling (394).

## Revendications

1. Attelage de remorque pour véhicules automobiles, comportant une partie de palier (10) solidaire du véhicule, un col d'attelage (40), qui est mobile par rapport à la partie de palier (10) entre une position de travail (A) et une position de repos (R) et qui est monté au moins rotatif contre la partie de palier (10) au moyen d'une tête de palier (32), un système de fixation du col d'attelage avec des éléments à emboîter (270, 280), lesquels, par un mouvement relatif, peuvent être amenés d'une position de blocage, dans laquelle la tête de palier (32) est bloquée par emboîtement par rapport à la partie de palier (10), dans une position de désolidarisation, dans laquelle la tête de palier (32) est mobile par rapport à la partie de palier (10), et inversement, des éléments à emboîter du côté palier (270) étant agencés de manière stationnaire contre une première joue (14) de la partie de palier (32), et un dispositif de positionnement mécanique (90), avec lequel les éléments à emboîter (270, 280) peuvent effectuer le mouvement relatif pour atteindre la position de blocage et la position de désolidarisation, **caractérisé en ce que** des éléments à emboîter du côté tête de palier (280) sont agencés de manière stationnaire contre la tête de palier (32), **en ce que** la tête de palier (32) est mobile dans une direction de mouvement (20) transversalement à une direction de pivotement par rapport à la partie de palier (10) en vue de déplacer les éléments à emboîter (270, 280) entre la position de blocage et la position de désolidarisation, **en ce que** le dispositif de positionnement mécanique (90) peut être amené dans une position de blocage, dans laquelle celui-ci positionne la tête de palier (32) de telle sorte que les éléments à emboîter (270, 280) sont en position de blocage, et peut être amené dans une position de désolidarisation dans laquelle celui-ci positionne la tête de palier (32) de telle sorte que les éléments à emboîter (270, 280) sont en position de désolidarisation, **en ce que** le dispositif de positionnement mécanique (90) comporte un accumulateur d'énergie et un mécanisme de transmission de force (94) pour l'accumulateur d'énergie (132), qui maintient automatiquement une position stable dans la position de blocage, **en ce que** le mécanisme de transmission de force (94) est conçu sous forme de mécanisme de démultiplication de force, qui provoque une amplification de force au moins dans une partie des positions possibles, **en ce que** le dispositif de positionnement (90) comporte une position de serrage formant la position de blocage, dans laquelle le dispositif de positionnement (90) génère une force (300) qui contribue à une force de serrage (296) agissant sur la tête de palier (32), et **en ce qu'**en cas d'application de la force de serrage (286) sur la tête de palier (32) dans la direction de la première joue du palier (14), des parties d'emboîtement coniques (274, 284) des éléments à emboîter (270, 280) formant au moins une paire d'éléments à emboîter en prise mutuellement, adjacentes l'une à l'autre et comportant des surfaces (274, 284) inclinées par rapport à la direction de mouvement (20) de la tête de palier (32), provoquent un blocage exempt de jeu de la tête de palier (32) par rapport à la partie de palier (10).

2. Attelage de remorque selon la revendication 1, **caractérisé en ce que** le mécanisme de démultiplication de force (94) dans la position de blocage comporte un système d'auto-blocage empêchant un mouvement en direction de la position de désolidarisation.

3. Attelage de remorque selon la revendication 1 ou 2, **caractérisé en ce que** le mécanisme de démultiplication de force (94) est un mécanisme à levier.

4. Attelage de remorque selon l'une quelconque des revendications précédentes, **caractérisé en ce que** l'accumulateur d'énergie (132) est un accumulateur d'énergie mécanique.

5. Attelage de remorque selon la revendication 4, **caractérisé en ce que** l'accumulateur d'énergie (132) est un ressort d'accumulation d'énergie.

6. Attelage de remorque selon l'une quelconque des revendications précédentes, **caractérisé en ce que** l'accumulateur d'énergie (132), dans la position de blocage, est dans un premier état tendu et, dans la position de désolidarisation, est dans un deuxième état tendu.

7. Attelage de remorque selon l'une quelconque des revendications précédentes, **caractérisé en ce que** le mécanisme de démultiplication de force (94) à l'état non actionné du dispositif de positionnement (90) se déplace automatiquement dans la position stable sous l'action de l'accumulateur d'énergie (132).

8. Attelage de remorque selon l'une quelconque des revendications précédentes, **caractérisé en ce que** la force générée dans la position correspondante par l'accumulateur d'énergie (132) est moins amplifiée par le mécanisme de démultiplication de force dans la position de désolidarisation que dans la position de blocage.

9. Attelage de remorque selon l'une quelconque des revendications précédentes, le mécanisme de démultiplication de force (94), dans ses positions à proximité de la position de blocage, applique la plus grande amplification à la force générée par l'accumulateur d'énergie (132).

10. Attelage de remorque selon l'une quelconque des revendications précédentes, **caractérisé en ce que** le mécanisme de transmission de force (94) est un mécanisme à genouillère.

11. Attelage de remorque selon la revendication 10, **caractérisé en ce que** le mécanisme à genouillère (94) est conçu de telle sorte que dans sa position de blocage il se situe à proximité de sa position de point mort (174).

12. Attelage de remorque selon l'une quelconque des revendications précédentes, **caractérisé en ce que** le dispositif de positionnement (90) comporte un accumulateur d'énergie de serrage (106).

13. Attelage de remorque selon la revendication 12, **caractérisé en ce que** l'accumulateur d'énergie de serrage (106) est un accumulateur d'énergie mécanique, en particulier un ressort d'accumulation d'énergie.

14. Attelage de remorque selon la revendication 12 ou 13, **caractérisé en ce que** l'accumulateur d'énergie de serrage (106) est apte à être activé lorsque le dispositif de positionnement (90) passe dans la position de serrage.

15. Attelage de remorque la revendication 14, **caractérisé en ce que** l'accumulateur d'énergie de serrage (106) est actif entre la position de serrage et une position de verrouillage du dispositif de positionnement (90).

16. Attelage de remorque selon la revendication 14 ou 15, **caractérisé en ce que** l'accumulateur d'énergie de serrage (106) est inactif entre la position de verrouillage et la position de désolidarisation du dispositif de positionnement (90).

17. Attelage de remorque selon l'une quelconque des revendications 14 à 16, **caractérisé en ce que** l'accumulateur d'énergie de serrage (106) est activable par le passage du dispositif de positionnement (90) de la position de verrouillage dans la position de serrage.

18. Attelage de remorque selon l'une quelconque des revendications 14 à 17, **caractérisé en ce que** l'accumulateur d'énergie de serrage (106) est activable par l'accumulateur d'énergie (132).

19. Attelage de remorque selon l'une quelconque des revendications 12 à 18, **caractérisé en ce que** l'accumulateur d'énergie de serrage (106) est intégré dans le mécanisme (94) du dispositif de positionnement (90).

20. Attelage de remorque selon l'une quelconque des revendications précédentes, **caractérisé en ce que** le dispositif de positionnement (90) est destiné à être actionné par un dispositif de dégagement (150).

21. Attelage de remorque selon la revendication 20, **caractérisé en ce que** le dispositif de dégagement (150) permet de déplacer le mécanisme (94) du dispositif de positionnement (90) dans la position de désolidarisation à l'encontre de l'action de l'accumulateur d'énergie (132).

22. Attelage de remorque selon la revendication 20 ou 21, **caractérisé en ce que** le dispositif de dégagement (150) agit sur le dispositif de positionnement (90) par un engrenage amplificateur de puissance (154, 164).

23. Attelage de remorque selon l'une quelconque des revendications 20 à 22, **caractérisé en ce que** le dispositif de dégagement (150) agit sur le dispositif de positionnement (90) par une commande à cames (154, 164).

24. Attelage de remorque selon l'une quelconque des revendications 20 à 23, **caractérisé en ce que** le dispositif de dégagement (150) permet de neutraliser le blocage automatique du dispositif de positionnement (90).

25. Attelage de remorque selon l'une quelconque des revendications 20 à 24, **caractérisé en ce que** le dispositif de dégagement (150) permet de bloquer le dispositif de positionnement (90) dans la position de blocage.

26. Attelage de remorque selon l'une quelconque des revendications 20 à 25, **caractérisé en ce que** le dispositif de dégagement (150) peut être manoeuvré manuellement.

27. Attelage de remorque selon la revendication 26, **caractérisé en ce que** le dispositif de dégagement (150) peut être manoeuvré manuellement par l'intermédiaire d'un élément à déplacement libre (190) agissant sur un élément de réglage (156).

28. Attelage de remorque selon l'une quelconque des revendications 20 à 27, **caractérisé en ce que** le dispositif de dégagement (150) est destiné à être actionné par une transmission électrique de dégagement (364).

29. Attelage de remorque selon la revendication 28, **caractérisé en ce que** la transmission électrique de dégagement (364) comporte un moteur d'entraînement (350) et un dispositif d'accouplement (356) électriquement activable.

30. Attelage de remorque selon la revendication 29, **caractérisé en ce que** le dispositif d'accouplement (356) électriquement activable est conçu pour former un attelage désolidarisé à l'état non traversé par un courant.

31. Attelage de remorque selon la revendication 29 ou 30, **caractérisé en ce que** la transmission électrique de dégagement (364) comporte une commande de dégagement (362) qui, à la suite d'un signal de départ, ferme le dispositif d'accouplement (356) électriquement activable pendant une durée de dégagement définie et le désolidarise ensuite.

32. Attelage de remorque selon la revendication 1 ou selon l'une quelconque des revendications précédentes, **caractérisé en ce que** le dispositif de positionnement (90) agit sur la tête de palier (32) par l'intermédiaire d'un dispositif de couplage (80).

33. Attelage de remorque selon la revendication 32, **caractérisé en ce que** le dispositif de couplage (80) comporte une goupille pour palier (18) mobile, sur laquelle la tête de palier (32) est montée rotative et par l'intermédiaire de laquelle la tête de palier (32) peut se déplacer de la position de blocage dans la position de désolidarisation et inversement.

34. Attelage de remorque selon la revendication 33, **caractérisé en ce que**, au moyen de la goupille pour palier (18) mobile, la tête de palier (32) est déplaçable en direction d'une première joue (14) de la partie de palier (10), laquelle porte les éléments à emboîter (270) du côté palier.

35. Attelage de remorque selon la revendication 34, **caractérisé en ce que** la goupille pour palier (18) est logée dans la partie de palier (10), c'est-à-dire dans la première joue du palier (14) et une deuxième joue du palier (16), disposée à distance de cette dernière, et la tête de palier (32) du col d'attelage (40) est agencée entre les joues du palier (14, 16).

36. Attelage de remorque selon l'une quelconque des revendications 33 à 35, **caractérisé en ce qu'**une action est exercée sur la goupille pour palier (18) à partir d'une joue du palier (14), à savoir à partir de son côté détourné de la tête de palier (32).

37. Attelage de remorque selon l'une quelconque des revendications 33 à 36, **caractérisé en ce que** le dispositif de couplage (80) comporte un levier de renvoi (60) qui est couplé avec la goupille pour palier (18).

38. Attelage de remorque selon la revendication 37, **caractérisé en ce que** le levier de renvoi (60) est agencé sur une des joues du palier (14), à savoir sur son côté opposé à la tête de palier (32).

39. Attelage de remorque selon la revendication 1 ou selon l'une quelconque des revendications précédentes, **caractérisé en ce que** la tête de palier (32) est apte à être bloquée par un dispositif de blocage (220) pour empêcher un mouvement de la position de blocage vers la position de désolidarisation.

40. Attelage de remorque selon la revendication 39, **caractérisé en ce que** le dispositif de blocage (220) prend appui sur la partie de palier (10).

41. Attelage de remorque selon la revendication 40, **caractérisé en ce que** le dispositif de blocage (220) prend appui sur la joue (14) de la partie de palier (10), laquelle porte les éléments à emboîter (270) du côté palier.

42. Attelage de remorque selon l'une quelconque des revendications 39 à 41, **caractérisé en ce que** le dispositif de blocage (220) est apte à être actionné par le dispositif de dégagement (150).

43. Attelage de remorque selon la revendication 42, **caractérisé en ce que** le dispositif de blocage (220) est apte à être actionné avec le dispositif de dégagement (150) en synchronisation définie par rapport au dispositif de positionnement (90).

44. Attelage de remorque selon la revendication 42 ou 43, **caractérisé en ce que** le dispositif de dégagement (150) en passant de la position de blocage dans la position de désolidarisation neutralise l'action du dispositif de blocage (220) avant que le dispositif de positionnement (90) commence à mettre hors de prise les éléments à emboîter (270, 280).

45. Attelage de remorque selon l'une quelconque des revendications 43 à 44, **caractérisé en ce que** le dispositif de dégagement (150) en passant de la position de désolidarisation dans la position de blocage incite tout d'abord le dispositif de positionnement (90) à mettre en prise les éléments à emboîter (270, 280), puis rend actif le dispositif de blocage (220).

46. Attelage de remorque selon l'une quelconque des revendications 39 à 45, **caractérisé en ce que** le dispositif de blocage (220) est conçu de manière auto-ajustable.

47. Attelage de remorque selon l'une quelconque des revendications 39 à 46, **caractérisé en ce que** le dispositif de blocage (220), dans sa position active, agit sur la tête de palier (32) avec une force contribuant à la force de serrage (296).

48. Attelage de remorque selon l'une quelconque des revendications 39 à 47, **caractérisé en ce que** le dispositif de blocage (220) agit sur le dispositif de couplage (80).

49. Attelage de remorque selon l'une quelconque des revendications 39 à 48, **caractérisé en ce que** le dispositif de blocage (220) est agencé sur une joue (14) du palier, à savoir sur son côté détourné de la tête de palier (32).

50. Attelage de remorque selon la revendication 48 ou 49, **caractérisé en ce que** le dispositif de blocage (220) comporte un corps de blocage (222) qui coopère avec le dispositif de couplage (80) et la partie de palier (10).

51. Attelage de remorque selon la revendication 49 ou 50, **caractérisé en ce que** le corps de blocage (222) prend appui contre la joue (14) de la partie de palier (10) sur un côté détourné des éléments à emboîter (270) du côté palier (224).

52. Attelage de remorque selon l'une quelconque des revendications 39 à 51, **caractérisé en ce que** le dispositif de blocage (220) et le dispositif de positionnement (90) sont agencés sur le même côté de la partie de palier (10).

53. Attelage de remorque selon l'une quelconque des revendications 39 à 51, **caractérisé en ce que** le dispositif de blocage (220) et le dispositif de dégagement (150) sont agencés sur le même côté de la partie de palier (10).

54. Attelage de remorque selon la revendication 1 ou selon l'une quelconque des revendications précédentes, **caractérisé en ce que** la tête de palier (32) comporte un alésage de palier (50) incliné par rapport à l'horizontale dans la position montée contre le véhicule, et **en ce que** les éléments à emboîter (280) sont agencés sur le côté (290) de la tête de palier (32), sur lequel l'alésage de palier (50) est plus proche de la voie de roulement que sur l'autre côté.

55. Attelage de remorque selon la revendication 1 ou selon l'une quelconque des revendications précédentes, **caractérisé en ce que** la goupille pour palier (18) est inclinée par rapport à l'horizontale et **en ce que** les éléments à emboîter (270) sont agencés sur le côté de la partie de palier (10) qui reçoit l'extrémité (22) de la goupille pour palier (18), c'est-à-dire l'extrémité la plus proche de la voie de roulement.

56. Attelage de remorque selon la revendication 1 ou selon l'une quelconque des revendications précédentes, **caractérisé en ce que**, dans la position de travail (A), une partie (270A, 270B, 270C, 280AA, 280BA, 280CA) des éléments à emboîter (270, 280), situés en position de blocage, est en prise.

57. Attelage de remorque selon la revendication 1 ou selon l'une quelconque des revendications précédentes, **caractérisé en ce que**, dans la position de repos (R), une partie (270A, 270B, 270C, 280AR, 280BR, 280CR) des éléments à emboîter (270, 280), situés en position de blocage, est en prise.

58. Attelage de remorque selon la revendication 56 ou 57, **caractérisé en ce que** contre la partie de palier (10) ou contre la tête de palier (32) est agencé au moins un premier élément à emboîter (280AA, 280BA, 280CA) qui est en prise, uniquement dans la position de travail (A), avec un élément à emboîter (270) respectivement sur l'autre partie (32, 10), et est agencé au moins un deuxième élément à emboîter (280AR, 280BR, 280CR) qui est en prise, uniquement dans la position de repos (R), avec un élément à emboîter (270) respectivement sur l'autre partie (32, 10).

59. Attelage de remorque selon l'une quelconque des revendications précédentes, **caractérisé en ce**, dans la position de travail (A), au moins une paire d'éléments à emboîter en prise est sollicitée dans la position de serrage par une force de serrage (296) dans la direction de mouvement (20) de la tête de palier (32), en vue de bloquer sans jeu la tête de palier (32) contre la partie de palier (10).

60. Attelage de remorque selon l'une quelconque des revendications précédentes, **caractérisé en ce que**, dans la position de travail (A), au moins deux paires d'éléments à emboîter (270, 280) peuvent être amenées en position de serrage et être sollicitées par la force de serrage (296).

61. Attelage de remorque selon la revendication 60, **caractérisé en ce que**, dans la position de travail (A), au moins trois paires d'éléments à emboîter (270, 280) peuvent être amenées en position de serrage et être sollicitées par la force de serrage (296).

62. Attelage de remorque selon l'une quelconque des revendications précédentes, **caractérisé en ce que**, dans la position de travail (A) et dans la position de serrage des paires d'éléments à emboîter (270, 280), la tête de palier (32) est sensiblement en appui contre la partie de palier (10) par l'intermédiaire des paires d'éléments à emboîter (270, 280).

63. Attelage de remorque selon l'une quelconque des revendications précédentes, **caractérisé en ce que**, dans la position de travail (A) et dans la position de serrage des paires d'éléments à emboîter (270, 280), la position de la tête de palier (32) est sensiblement fixe par rapport à la partie de palier (10) par l'intermédiaire des paires d'éléments à emboîter (270, 280).

64. Attelage de remorque selon la revendication 1 ou selon l'une quelconque des revendications précédentes, **caractérisé en ce que** le système de fixation du col d'attelage est conçu de telle sorte que les éléments à emboîter (270, 280) ne peuvent être amenés en prise par conjugaison de forme que dans la position de travail (A) et dans la position de repos (R).

65. Attelage de remorque selon la revendication 64, **caractérisé en ce que** le système de fixation du col d'attelage comporte des éléments de guidage (312, 316) qui empêchent la mise en prise des éléments à emboîter (270, 280) dans des positions intermédiaires entre la position de travail (A) et la position de repos (R).

66. Attelage de remorque selon la revendication 1 ou selon l'une quelconque des revendications précédentes, **caractérisé en ce que** la tête de palier (32) est montée librement rotative sur la goupille pour palier (18).

67. Attelage de remorque selon la revendication 66, **caractérisé en ce que** le col d'attelage (40) est apte à être pivoté manuellement par rapport à la partie de palier (10).

68. Attelage de remorque selon la revendication 1 ou selon l'une quelconque des revendications précédentes, **caractérisé en ce qu'**il est prévu un mécanisme d'entraînement en pivotement (368) électriquement activable pour le col d'attelage (40).

69. Attelage de remorque selon la revendication 68, **caractérisé en ce que** le mécanisme d'entraînement en pivotement (368) comporte un moteur d'entraînement électrique (370).

70. Attelage de remorque selon la revendication 68 ou 69, **caractérisé en ce que** le mécanisme d'entraînement en pivotement (368) comporte un système de couplage (394) amovible qui, en cas de panne du mécanisme d'entraînement en pivotement (368), permet un pivotement manuel du col d'attelage (40).

71. Attelage de remorque selon la revendication 70, **caractérisé en ce que** le système de couplage amovible est un système de couplage à friction (394).
